(19) Europäisches Patentamt / European Patent Office / Office européen des brevets

(11) **EP 0 895 420 B1**

(12) **EUROPEAN PATENT SPECIFICATION**

(45) Date of publication and mention
of the grant of the patent:
**17.01.2007 Bulletin 2007/03**

(51) Int Cl.:
***H04N 7/173*** *(2006.01)*          ***H04N 7/24*** *(2006.01)*

(21) Application number: **98306129.2**

(22) Date of filing: **31.07.1998**

(54) **A data transmission system and reproducing apparatus**

Datenübertragungssystem und -wiedergabegerät

Système de transmission de données et appareil de reproduction

(84) Designated Contracting States:
**DE FR GB**

(30) Priority: **01.08.1997 JP 20776697**
**05.09.1997 JP 24128097**

(43) Date of publication of application:
**03.02.1999 Bulletin 1999/05**

(73) Proprietor: **VICTOR COMPANY OF JAPAN, LTD.**
**Yokohama 221-0022 (JP)**

(72) Inventors:
• **Yamada, Yasuhiro**
**Singapore 128797 (JP)**
• **Tsutsumi, Masahito**
**Yokosuka-shi,**
**Kanagawa-ken (JP)**

(74) Representative: **Dempster, Benjamin John Naftel**
**et al**
**Withers & Rogers LLP**
**Goldings House,**
**2 Hays Lane**
**London SE1 2HW (GB)**

(56) References cited:
**EP-A- 0 402 954          EP-A- 0 660 613**
**US-A- 5 477 542          US-A- 5 528 284**
**US-A- 5 565 924**

• **"METHOD TO DELIVER SCALABLE VIDEO**
**ACROSS A DISTRIBUTED COMPUTER SYSTEM"**
**IBM TECHNICAL DISCLOSURE BULLETIN, IBM**
**CORP. NEW YORK, US, vol. 5, no. 37, May 1994**
**(1994-05), pages 251-255, XP000453152 ISSN:**
**0018-8689**

**Description**

BACKGROUND OF THE INVENTION

1. Field of the Invention

This invention relates to a a data transmission system and a reproducing apparatus.

2. Description of the Prior Art

A data transmission system including a server apparatus supplying video data and audio data to be reproduced continuously in time base to a network and a client apparatus for receiving the video data and the audio data from the network and reproduces the received video data and audio data continuously in time base is known. Moreover, a reproducing apparatus receives video data and audio data from a network and reproduces the received video data and audio data continuously in time base is known.

A prior art example of a technique for delivering multimedia data such as video or audio data across a network is described in "Method to Deliver Scalable Video across a Distributed Computer System", IBM Tech. Disc. Bull. Vol. 37, No. 5, May 1994.

SUMMARY OF THE INVENTION

The aim of the present invention is to provide a superior data transmission system and a superior reproducing apparatus.

According to the present invention a first data transmission system is provided which comprises: at least one server apparatus and at least one client apparatus, the server apparatus comprising:

> a memory that is adapted to store coded data obtained by coding at least one of moving picture image data and audio data; and
> a data transmitter that is adapted to transmit intermittently burst portions of said coded data read from said memory, said burst portions being transmitted in respective bursts to a network system; and
> the client apparatus comprising:

> > a receiver which receives the burst portions of the coded data transmitted from the server apparatus in the bursts directed to the client apparatus; and
> > a decoder that is adapted to decode the burst portions of the coded data to reproduce the moving picture image data or the audio data in a time base,
> > characterised in that said server apparatus further comprises:

> > > a server time data generator that is adapted to generate server's time data for each of the burst portions of the coded data read out from said memory, the server's time data being generated for each burst portion of the coded data and indicating a transmission time of a next burst portion of the coded data to be transmitted to the client apparatus after transmission of a present burst portion of the coded data for which the server's time data was generated, the transmission times indicated by the pieces of server's time data being generated to provide continuous reproduction of the moving picture image data or the audio data by the decoder of the client apparatus; and
> > > an attaching unit that is adapted to attach said server's time data generated for each burst portion of the coded data to the respective burst portion of said coded data for which it was generated, and said client apparatus further comprising:

> > > > an extractor that is adapted to extract said server's time data from each burst portion of the coded data received in said receiver, a client's time data generator that is adapted to generate client's time data indicative of a present time of said client apparatus, and a data requesting unit that is adapted to transmit, each time the extractor extracts current server's time data from a current burst portion of the coded data, a request for a next burst portion of the coded data subsequent to the current burst portion of the coded data to said server apparatus at a request timing determined in accordance with said current server's time data and a present time indicated by said client's time data, the server apparatus outputting the next burst portion of the coded data to the client apparatus in response to the request.

According to the present invention, a second data transmission system is also provided which comprises at least one server apparatus and at least one client apparatus, the server apparatus comprising:

a memory that is adapted to store coded data obtained by coding at least one of moving picture image data and audio data; and
a data transmitter that is adapted to transmit intermittently burst portions of said coded data read from said memory, said burst portions being transmitted in respective bursts to a network system; and the client apparatus comprising:

a receiver which receives the burst portions of the coded data transmitted from the server apparatus in the bursts directed to said client apparatus; and
a decoder that is adapted to decode the burst portions of the coded data to reproduce the moving picture image data or the audio data in a time base, characterized in that said server apparatus further comprises:

a time interval data generator which generates server time interval data that indicates time intervals of transmission of the burst portions of the coded data to enable the client apparatus to continuously reproduce at least one of the moving picture image data and the audio data;
a data attaching unit which attaches said time interval data to the first burst portion of the coded data; and
a data transmitter which intermittently transmits the first portion of the coded data with said time interval data and the other portions of the coded data read from the memory to a network in response to requests from the client apparatus, said client apparatus further comprises:

extraction means for extracting said server time interval data from the first portion of the coded data received by the receiver;
a clock circuit which generates a reference clock signal; and
a data requesting unit which transmits a request to said server apparatus for transmission of a next burst portion of the coded data to said client apparatus every requested client's time interval determined in accordance with said extracted server time interval data and a client time indicated by said reference clock signal to periodically transmit the requests to said server apparatus, and
the decoder continuously decodes the portions of the coded data received by the receiver to reproduce at least one of the moving picture image data and the audio data without intermission in a client time base.

The present specification also describes a fourth data transmission system which comprises: at least one server apparatus having a memory storing data of at least one of coded moving picture image data and coded audio data and a transmitting circuit for intermittently transmitting a burst including the data read from the memory to a network in response to data request; and at least client apparatus including a data request transmission circuit for transmitting the data request, a receiving circuit for receiving the transmitted data in the burst directing to the client apparatus and a decoding circuit for decoding the data from the receiving circuit to be reproduced continuously in time base, wherein the client apparatus further comprises a network buffer circuit for temporally storing the received data and supplying the temporally stored data to the decoding circuit, a buffer observing circuit for detecting an empty area of the network buffer circuit regarding the stored data, and a request transmitting circuit transmitting the data request to the server when the empty area is higher than a reference and the server apparatus further comprises a request receiving circuit for receiving the data request from the client and operating the transmitting circuit to transmit the next burst in response to the data request.

In the fourth data transmission system, the request transmitting circuit transmits the data request including empty area size data indicative of a size of the detected empty area and the transmission circuit controls an amount of data of the coded data to be transmitted in accordance with the capacity of the empty area.

In the fifth data transmission system, the client apparatus may further comprise a request number data generating circuit responsive to the buffer memory observing circuit for generating request number data indicative of successively increasing number when the empty area is higher than the reference, the request transmitting circuit may further transmit the request number data with the transmission request, and the server apparatus may transmit the received request number data with the data requested by the transmission request to the client apparatus.

In the fifth data transmission system, the buffer observing circuit may generate a test signal and transmit the test signal to the server when the empty area is higher than the reference, the server apparatus may further comprise a test circuit for receiving the test signal and immediately transmitting a response signal at least once, the client apparatus may further comprise a data buffer control circuit for controlling a capacitance of the data buffer circuit, a response signal receiving circuit for receiving the response signal and measuring circuit for measuring an interval between when the test signal is transmitted and when the response signal is received, the data buffer observing circuit further generates amount control data in accordance with the interval and transmits the amount control data with the next burst transmission request, the request receiving circuit in the server apparatus controls transmitting the burst including the coded data at an amount determined in accordance with the amount control data, and the data buffer control circuit controls the capacitance of the data buffer circuit in accordance with the interval.

In this case, the server apparatus may further comprise a test signal generation circuit for generating a test signal and transmitting the test signal to the server in response to the data request, a calculation circuit, and a compensation circuit, the client apparatus may further comprise a test circuit for receiving the test signal and immediately transmitting a response signal including data transmitting amount data and capacity data of the data buffer circuit, the server apparatus may further comprise a response signal receiving circuit for receiving the response signal and a measuring circuit for measuring an interval between when the test signal is transmitted and when the response signal is received, the calculation circuit may calculate a data rate from the the interval and the capacity data, and the compensation circuit may compensate the data amount data from the response signal receiving circuit in accordance with the data rate from the calculation circuit.

In the first to fifth data transmission systems, the client apparatus may further comprise a reproducing circuit for reproducing the video data and the audio data continuously in time base as a reproducing apparatus.

BRIEF DESCRIPTION OF THE DRAWINGS

The object and features of the present invention will become more readily apparent from the following detailed description taken in conjunction with the accompanying drawings in which:

Fig. 1 is a block diagram of a client apparatus of the first embodiment;
Figs. 2A to 2D show timing charts of transmitting data requests and transmitted data of the first embodiment;
Figs. 3A and 3B are timing charts showing data requests and data transmission of the first embodiment in detail;
Figs. 4A and 4B are timing charts of a second embodiment showing data transmission between a server apparatus and a client apparatus;
Figs. 5A and 5B shows timing charts of a third embodiment showing transmission timings between a server apparatus and a client apparatus;
Fig. 6 is a block diagram of a server apparatus of a fourth embodiment;
Fig. 7 is a block diagram of the fourth embodiment showing a network buffer memory shown in Fig. 6;
Figs. 8A to 8D are timing charts of the fourth embodiment showing transmission timings between the server apparatus and the client apparatus;
Figs. 9A and 9B are timing charts of a fifth embodiment showing transmission operation between a server apparatus and a client apparatus;
Figs. 10A and 10B are timing charts of a sixth embodiment showing transmission operation between a server apparatus and a client apparatus;
Figs. 11A and 11B are timing charts of a seventh embodiment showing transmission operation between a server apparatus and a client apparatus;
Figs. 12A and 12B are timing charts of a modification in the seventh embodiment showing transmission operation between the server apparatus and the client apparatus;
Figs. 13A and 13B are timing charts of an eighth embodiment showing transmission operation between a server apparatus and a client apparatus;
Fig. 14 is a block diagram of a client apparatus of a ninth embodiment;
Figs. 15A to 15D are timing charts of the ninth embodiment showing the video data transmission operation between the server apparatus and the client apparatus and the audio data transmission operation between the server apparatus and the client apparatus;
Figs. 16A and 16B are block diagrams of data transmission systems of this invention;
Fig. 17 is a block diagram of a server apparatus of the first embodiment;
Fig. 18 is a block diagram of a server apparatus of the second embodiment;
Fig. 19 is a block diagram of a client apparatus of the second embodiment;
Fig. 20 is a block diagram of a server apparatus of the third embodiment;
Fig. 21 is a block diagram of a client apparatus of the third embodiment;
Fig. 22 is a block diagram of a client apparatus of the fourth embodiment;
Fig. 23 is a block diagram of a server apparatus of the fifth embodiment;
Fig. 24 is a block diagram of a client apparatus of the fifth embodiment;
Fig. 25 is a block diagram of a server apparatus of the sixth embodiment;
Fig. 26 is a block diagram of a client apparatus of the sixth embodiment;
Fig. 27 is a block diagram of a server apparatus of the seventh embodiment;
Fig. 28 is a block diagram of a client apparatus of the seventh embodiment;

Fig. 29 is a block diagram of a server apparatus of the eighth embodiment;
Fig. 30 is a block diagram of a client apparatus of the eighth embodiment; and
Fig. 31 is a block diagram of a server apparatus of a ninth embodiment.

The same or corresponding elements or parts are designated with like references throughout the drawings.

DETAILED DESCRIPTION OF THE INVENTION

(FIRST EMBODIMENT)

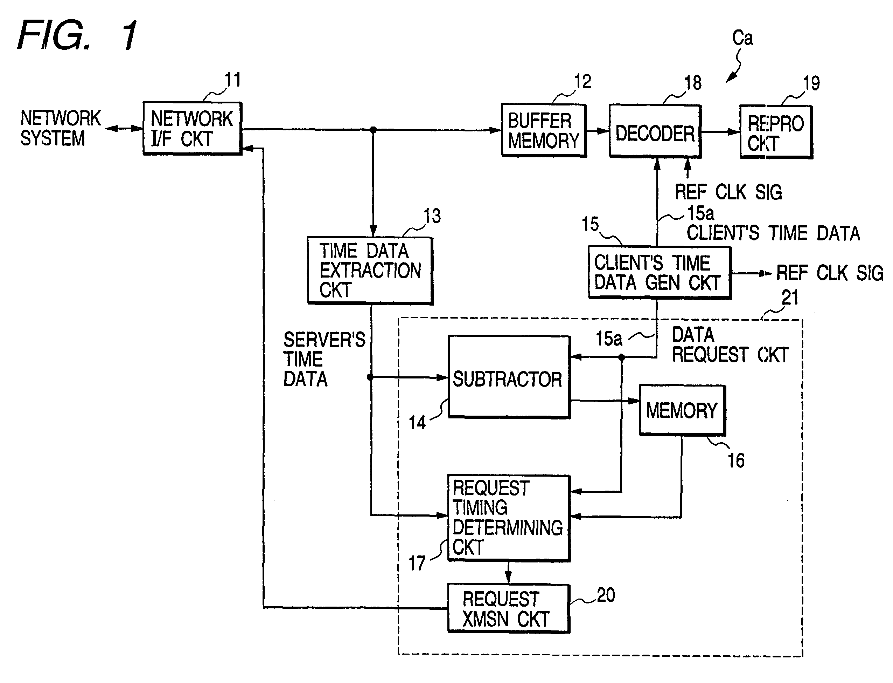

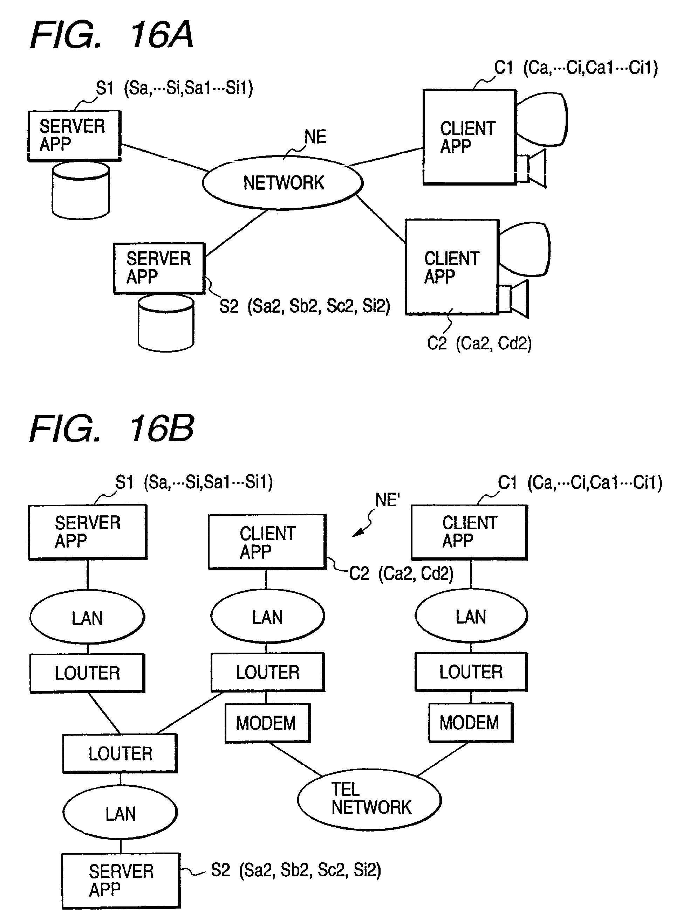

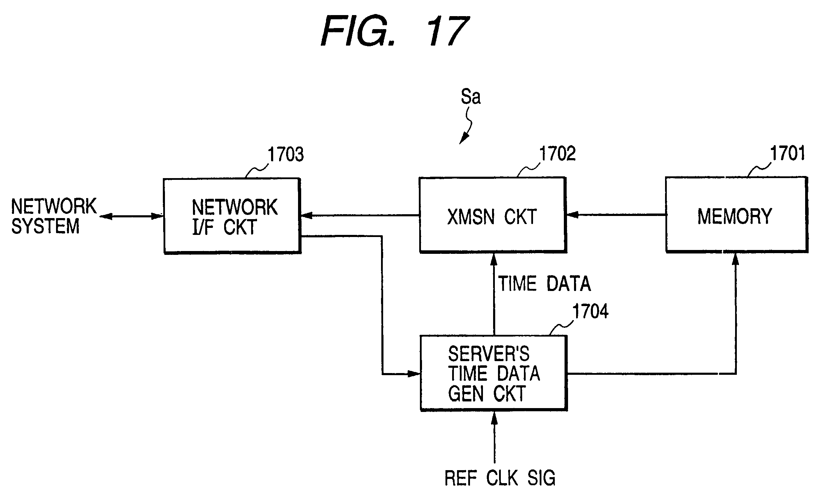

Fig. 1 is a block diagram of a client apparatus of the first embodiment. Figs. 16A and 16B are block diagrams of the data transmission system of this invention. Fig. 17 is a block diagram of a server apparatus of the first embodiment.

The data transmission system of the first embodiment comprises at least a server apparatus Sa and at least a client apparatus Ca coupled through a network NE comprising a single network as shown in Fig. 16A. The server apparatus Sa may coupled to the client apparatus Ca through a network system NE' including a plurality of different kinds of networks as shown in Fig. 16B.

A server apparatus Sa includes a memory 1701 for storing data of at least one of coded video (moving picture image) data and coded audio data to be reproduced continuously and a transmission circuit 1702 for intermittently transmitting a burst of the data read from the memory 1701 to a network system NE or NE' through a network interface circuit 1703.

The client apparatus Ca has a network interface 11, a buffer memory 12 for receiving the transmitted data in the burst directing to the client apparatus Ca and a decoder 18 for decoding the received coded video data and audio (sound) data from the buffer memory 12 in response to client's time data 15a, and a reproducing unit 19 for reproducing the decoded video data and the decoded audio data continuously in time base.

The server apparatus Sa further comprises a server's time data generation circuit 1704 for generating server's time data indicative of time of next transmitting the burst to provide continuously reproducing the video data and the audio data. The transmission circuit 1702 attaches the server's time data to the coded data from the memory 1701 in the burst to transmit the burst to the network system NE' through the network interface circuit 1703.

The client apparatus Ca further includes a time data extraction circuit 13 for extracting the server's time data from the received data, a client's time data generation circuit 15 for generating a client's time data in response to a reference clock signal, and a data requesting circuit 21 for transmitting a request for transmitting the next burst at a request timing determined in accordance with the server's time data and client's time data. More specifically, the data request circuit 21 comprises a subtractor 14, a memory 16, a request timing determining circuit 17, and a request transmission circuit 20.

The subtractor 14 obtains a difference between the server's time data from the time data extraction circuit 13 and the client's time data 15a when the time data is received. The data requesting circuit 17 compensates a relation between the client's time data and the received server's time data in accordance with the difference from the memory 16, and determines the request timing in accordance with the client's time data and the compensated relation. Alternatively, the client's time data generation circuit 15 may be compensated in accordance with the extracted server's time data.

In the data transmission system of the first embodiment, the server apparatus Sa stores the coded video data and the accompanied audio data, the coded audio data, and the coded video data and transmits in response to a program transmission request from the client apparatus Ca. The server apparatus Sa transmits the program data incontinuously, that is, intermittently transmits a burst including the video data and the audio data to be continuously reproduced in the real time base without lack of data to be reproduced.

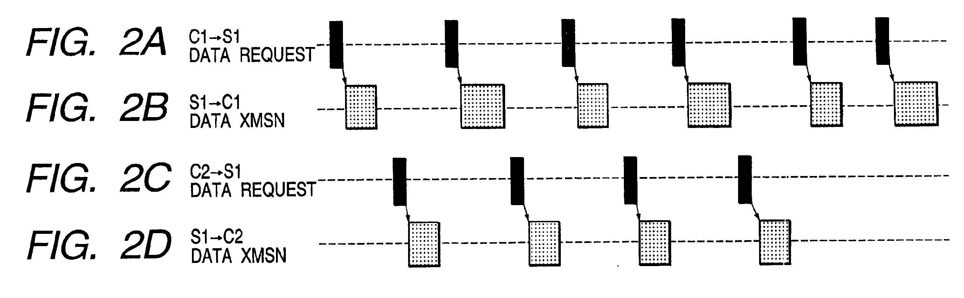

Figs. 2A to 2D show timing charts of transmitting request and transmitted data of the first embodiment.

The client apparatus Ca transmits a request for transmitting the next burst of the coded data to the sever apparatus S1. In response to this, the server apparatus S1 transmits the coded data read from the memory 1701 to the client apparatus C1. On the other hand, another client apparatus C2 transmits a request for transmitting the next burst of the coded data to the same sever apparatus S1. In response to this, the server apparatus S1 transmits the coded data read from the memory 1701 to the client apparatus C2 at different timing. If there is a collision of requesting data to the same server apparatus S1, one of the client apparatus, (ex. C1), should wait until the other client apparatus (ex. Ca) finishes receiving the transmitted data. However, if there is a collision between data requesting by the client apparatus C1 and C2 to different server apparatus S1 and S2, it is possible to transmit the data at the same time.

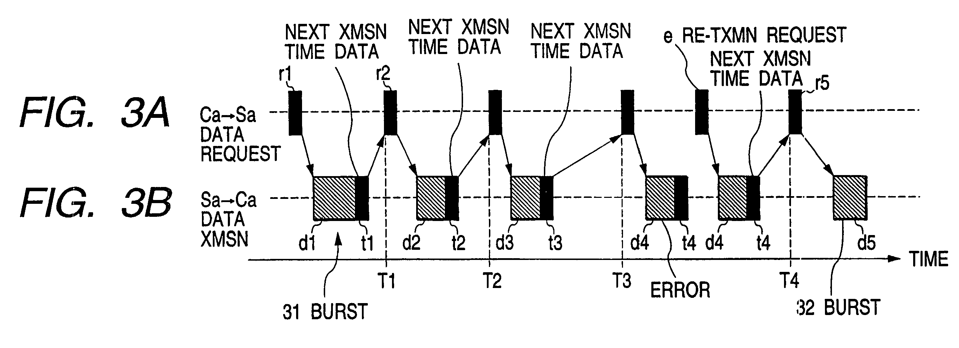

Figs. 3A and 3B are timing charts showing data requests and data transmission of the first embodiment in detail.

A client Ca transmits the data request r1 for the next burst of the coded data to the server apparatus Sa through a network system NE or NE', the server apparatus Sa1 transmits the coded data read from the memory 1701 in a burst 31. The burst 31 includes coded data d1 (d1-d4) such as the video data and the accompanied audio data or the data to be reproduced in the real time base and the server's time data t1 (t1-t4) indicative of next transmission to be requested by the client apparatus Ca. However, it is also possible to transmit only the coded data d5 in a burst 32. The server's time data t1 is time-division multiplexed with the coded data at the end of the burst 31. However, it is also possible to arrange the server's time data in any position in the burst 31.

The server's time data t1, t2, t3, and t4 represents the last time information of each data d1 to d4 or time information of the next data d2, d3, d4, and d5 which is being waiting for transmission.

The client apparatus Ca receives variable length of coded data, that is, the burst 31 by the network interface circuit 11 and temporally stores the coded data d1 in the buffer memory 12. On the other hand, the server's time data t1 is extracted from the received data from the network interface circuit 11 and supplies the extracted server's time data t1 to the subtractor 14 and to the request timing determining circuit 17. The decoder 18 decodes the coded data d1 in response to a reference clock signal and the client's time data 15a from the client's time data generation circuit 15. The client's time data generation circuit comprises a counter (not shown) for counting the reference clock signal of 90 KHz generated from a clock signal of 27 MHz for digital video signal for example.

Generally, there is a difference between the server's time data t1 and the client's time data. Therefore, the subtractor 14 obtains the difference between the server's time data t1 and the client's time data and the memory 16 stores the difference. The request timing determining circuit 17 compensates the server's time data and compares the compensated server's time data with the client's time data 15a. When there is agreement, the request transmission circuit 20 generates the data request r2 requesting the next transmitting the burst.

Compensating the server's time data may be executed by the server's time data is preset to the client's time data generation circuit (counter) 15 and then, the client's time data generation circuit 15 self-runs. That is, the client's time data generation circuit 15 may comprise a self-running counter.

The request timing determining circuit 17 compensates the server's time data t1 in accordance with the difference stored in the memory 16 and at T1 indicated by the compensated t1, the request timing determining circuit 17 informs the request transmission circuit 20 of the requesting timing. The request transmission circuit 20 generates the request r2 and transmits it to the server apparatus Sa through the network interface circuit 11. The server apparatus Sa transmits the next coded data d2 and the server's time data t2 to the client apparatus Ca according to the request r2.

There is a delay to receive the coded data (ex. d1) from transmission of the request (ex. r1). However, it is also possible to take consideration of the delay in transmission of the data request (ex. r1). Moreover, if the capacity of the data buffer is sufficient, it is possible to transmit the request earlier than the determined timing to provide a margin against busy traffic or erroneous transmission.

This processing is repeated to reproduce the data to be reproduced in real time base.

The coded data d1-d5 includes error check data Cr3 (cyclic redundancy check code) and the decoder 18 effects the error check and the error correction in accordance with the error check data Cr3.

If an error occurs which cannot be corrected in accordance with the error check data Cr3 during decoding, the client apparatus Ca transmits the re-transmission request "e", as shown by Fig. 3, to the server apparatus Sa. Then, in response to the re-transmission request, the server apparatus Sa transmits the same coded data d4 and the server's time data t4 to the client apparatus Ca again.

The client apparatus Ca decodes the re-transmitted data d4 by the decoder 14 and at the timing T4 indicated by the compensated t4 as described above, the data request r5 for next transmission of the burst is transmitted by the request transmission circuit 20.

In response to this data request r5, the server apparatus Sa transmits the coded data d5 to the client Ca.

As mentioned, in response to the data request for next transmitting the coded data to be reproduced in the real time base by the client apparatus Ca, the client apparatus Ca can receives the incontinuously transmitted coded data and the server's time data from the server apparatus Sa thorough the network system NE or NE', so that the client apparatus Ca can continuously reproduce the incontinuously transmitted data as moving picture image and a sound.

(SECOND EMBODIMENT)

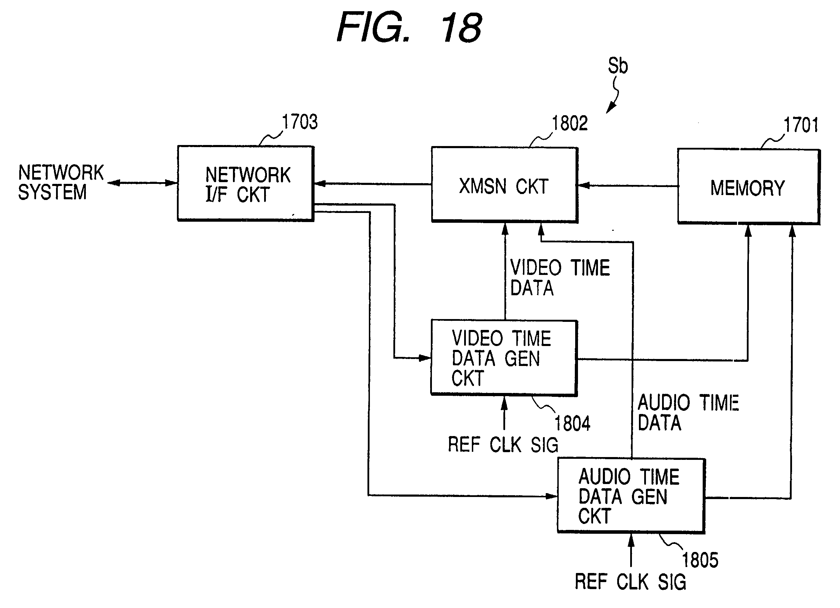

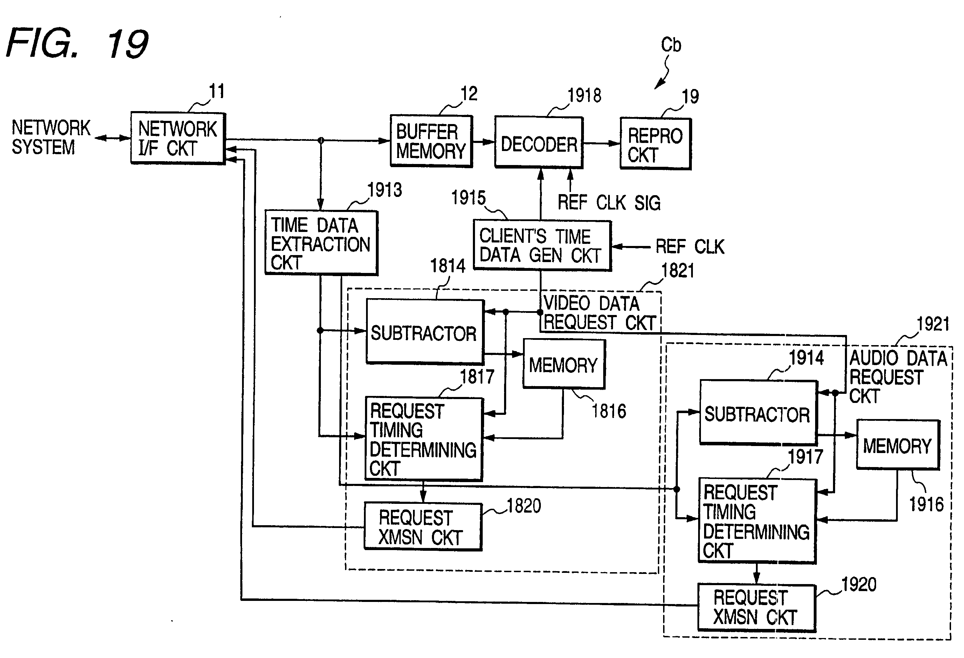

Fig. 18 is a block diagram of a server apparatus of a second embodiment. Fig. 19 is a block diagram of a client apparatus of a second embodiment.

A data transmission system of the second embodiment includes at least one server apparatus Sb and at least one client apparatus Cb coupled through the network system NE or NE'.

The data transmission system of the second embodiment is substantially the same as the first embodiment. The difference is that the video data and the audio data is transmitted independently with transmission timings controlled video time data and audio time data transmitted from the server apparatus Sb. That is, in Fig. 18, the server apparatus Sb includes a video time data generation circuit 1804 for generating video time data indicative of next transmission time of the video burst to provide continuously reproducing the video data and an audio time data generation circuit 1805 for generating audio time data indicative of next transmission time of the next audio burst. The transmission circuit 1802 attaches the video time data from the memory 1701 to the coded video data in the video burst and independently attaches the audio time data from the memory 1701 to the coded audio data in the audio burst,

Correspondingly, in Fig. 19, the client apparatus Cb includes a time data extraction circuit 1913 for extracting the video time data and the audio time data from the video burst and the audio burst respectively, a video data request circuit 1821 and an audio data request circuit 1921.

The video data request circuit 1821 comprises a subtractor 1814, a memory 1816, a request timing determining circuit 1817, and a request transmission circuit 1820.

The subtractor 14 obtains a difference between the video time data from the time data extraction circuit 1913 and the client's time data 15a when the video time data is received. The data requesting circuit 1817 compensates a relation between the client's time data and the received video time data in accordance with the difference from the memory 1816, and determines the request timing of the video data in accordance with the client's time data and the compensated relation regarding the video time data.

The audio data request circuit 1921 comprises a subtractor 1914, a memory 1916, a request timing determining circuit 1917, and a request transmission circuit 1920.

The subtractor 1914 obtains a difference between the audio time data from the time data extraction circuit 1913 and the client's time data 15a when the audio time data is received. The data requesting circuit 1917 compensates a relation between the client's time data and the received audio time data in accordance with the difference from the memory 1916, and determines the request timing of the audio data in accordance with the client's time data and the compensated relation regarding the audio time data.

In response to the request transmission circuits 1820 and 1920, the request transmission circuits 1820 and 1920 respectively transmit the video data request and the audio data request independently.

In the server apparatus Sb, the video time data generation circuit 1804 generates the video time data indicative of next transmission time of the video burst to provide continuously reproducing the video data. On the other hand, the audio time data generation circuit 1805 generates the audio time data indicative of next transmission time of the audio burst independently. The transmission circuit 1802 having a data attaching function attaches the video time data to the coded video data in the video burst and attaches the audio time data to the coded audio data in the audio burst.

In the client apparatus Cb, the time data extraction circuit 1913 extracts the video time data from the video burst from the network interface circuit 11 and supplies the video time data to the video data request circuit 1821 and extracts the audio time data from the audio burst from the network interface circuit 11 and supplied the extracted audio time data to the audio data request circuit 1921. The client's time data generation circuit 1915 supplies the client's time data to the video data request circuit 1821 and the audio data request circuit 1921.

The video data requesting circuit 1821 transmits the video data request for transmitting the next video burst in accordance with the extracted video time data and the present time indicated by the client's time data. The audio data requesting circuit 1921 transmits the audio request for next transmitting the audio burst in accordance with the extracted audio time data and present time indicated by the client's time data.

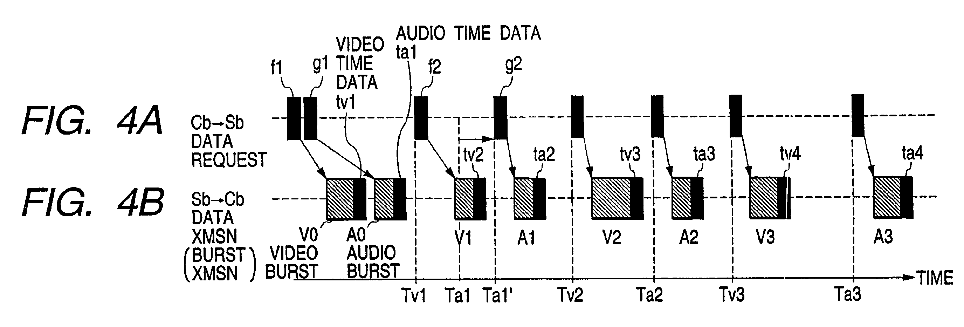

Figs. 4A and 4B are timing charts of the second embodiment showing data transmission between the server apparatus Sb and the client apparatus Cb.

The client apparatus Cb transmits the video data request f1 and the audio data request g1 to the server apparatus Sb as shown in Fig. 4A. In response to the video data request f1 and the audio data request g1, the server apparatus Sb transmits a video burst V0 including video data and video time data tv1 and an audio burst A0 including the audio data and the audio time data ta1. At timing Tv1, indicated by the compensated video time data tv1, the client apparatus Cb transmits video data request f2. In response to reception of the video data request f2, the server apparatus Sb transmits the next video burst V1. On the other hand, at the timing Ta1 indicated by the compensated audio time data ta1, the video burst V1 is being transmitted from the server apparatus Sb to the client apparatus Cb, so that the client apparatus Cb postpones transmitting audio data request g2 to completion of the video burst V1 and transmits the audio data request g2 at a timing Ta1'. This processing is repeated to reproduce the video data and the audio data continuously in time base.

In this embodiment, transmitting the video data and the audio data is controlled by independent video time data and audio time data indicating the next transmission video burst and audio burst respectively, wherein the video time data and the audio time data is compensated by the subtractors 1814 and 1914 to obtain the difference between the video time data extracted by the time data extraction circuit 1913 and the client's time data and the difference between the audio time data extracted by the time data extraction circuit 1913 and the client's time data respectively, so that it is possible to receive the video data and the audio data from the different server apparatus Sb1 and Sb2. For example, the client apparatus Cb receives the video data from the server apparatus Sb1 and receives the audio data from the server apparatus Sb2.

(THIRD EMBODIMENT)

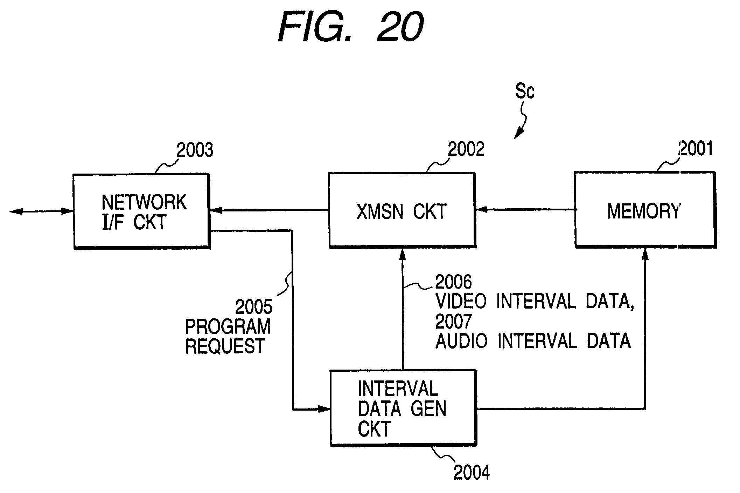

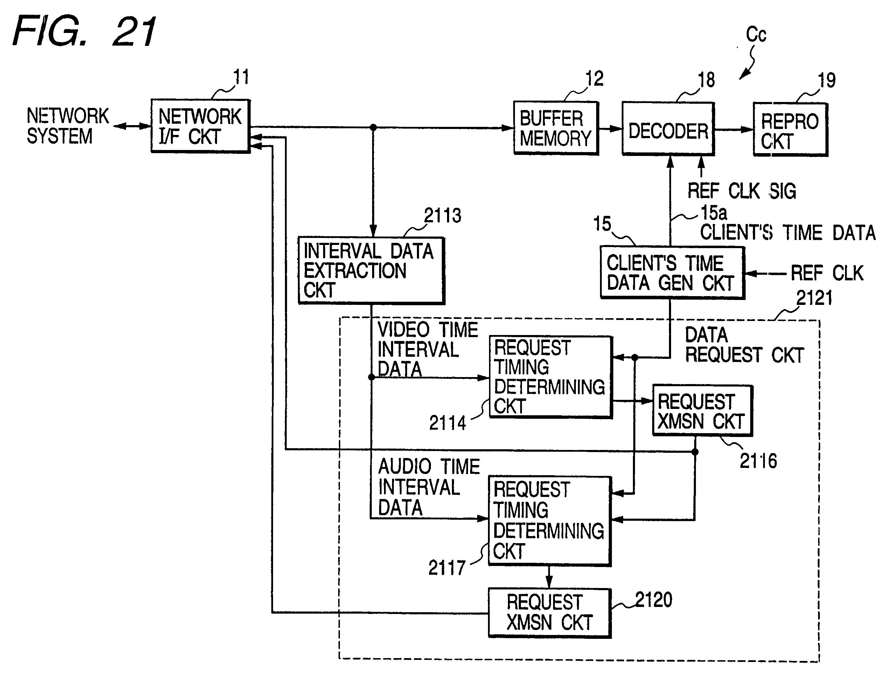

Fig. 20 is a block diagram of a server apparatus Sc of a third embodiment. Fig. 21 is a block diagram of a client apparatus Cc of a third embodiment.

A data transmission system of the third embodiment includes at least one server apparatus Sc and at least one client apparatus Cc coupled through the network system NE or NE'.

The data transmission system of the third embodiment is substantially the same as the first embodiment. The difference is that interval data is transmitted from the server apparatus Sc to the client apparatus Cc at least once and the data request of the burst is repeated periodically at the interval indicated by the interval data transmitted from the server apparatus Sc.

The server apparatus Sc comprises an interval data generation circuit 2004 for generating video time interval data indicative of time interval of successive coding to provide continuously reproducing the video data and audio time interval data indicative of time interval of audio burst for continuously reproducing. The transmission circuit 2002 attaches the video time interval data to the video data from the memory 2001 in the video burst and the audio time interval data to the audio data from the memory 2001 in the audio burst to the client apparatus Cc through the network interface circuit 2003.

The client apparatus Cc, as shown in Fig. 21, comprises an interval data extraction circuit 2113 for extracting the video time interval data and the audio time interval data from the received data from the network interval circuit 11, a request timing determining circuit 2114 for determining a request timing of the video burst in accordance with the video time interval data from the interval data extraction circuit 2113 and the client's time data from the client's time data generation circuit 15 and a request timing determining circuit 2117 for determining a request timing of the audio burst in accordance with the audio time interval data from the interval data extraction circuit 2113 and the client's time data from the client's time data generation circuit 15, a request transmission circuit 2116 responsive to the request timing determining circuit 2114 for transmitting data request for the next video burst, a request transmission circuit 2120 responsive to the request timing determining circuit 2117 for transmitting data request for the next audio burst through the network interface circuit 11 in addition to the buffer memory 12, the decoder 18, the reproduction circuit 19, the client's time data generation circuit 15, and the network interface circuit 11.

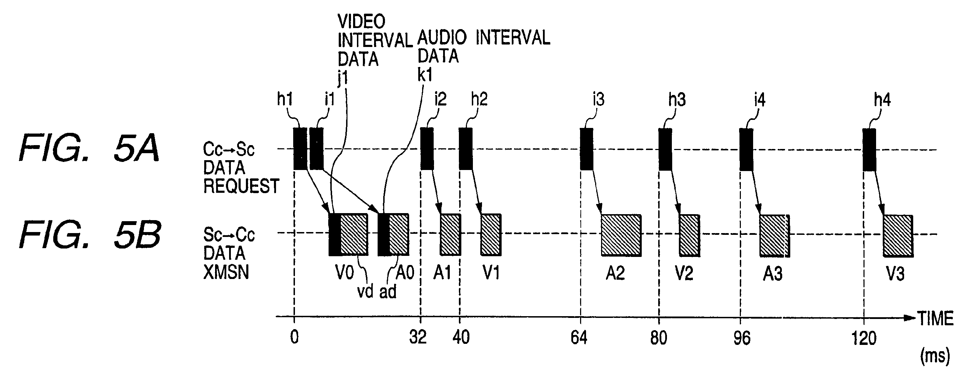

Figs. 5A and 5B show timing charts showing transmission timings between the server apparatus Sc and the client apparatus Cc.

In this embodiment, the video time interval data j1 and the audio time interval data k1 is transmitted at the first video burst V0 and the first audio burst A0. In Fig. 21, the request transmission circuit 2116 periodically transmits the data request of the video burst at the interval determined in accordance with the video interval data j1 and the request transmission circuit 2120 periodically transmits the data request of the audio burst at the interval determined in accordance with the audio interval data k1. The buffer memory 12, the decoder 18, and reproducing circuit 19 continuously reproduce the incontinuously received video data and the audio data.

For example if the video data is coded every frame of 25 Hz, the coding period of the video data is 40 ms (=1/25 Hz) and the audio signal is sampled at 32 kHz and coded every 1024 events of sampling (this is referred to as an audio frame), so that the coding period of the audio data is 32 ms (=1024/(32x $10^3$) Hz).

In Figs. 5A and 5B, the client Cc transmits data requests h1 and i1 to the server apparatus Sc. In response to this, as shown in Fig. 5B, the server apparatus Sc transmits the first video burst V0 including the video interval data j1 of 40 msec coding period and the video data and the first audio burst A0 including the audio interval data k1 of 32 ms coding period and the audio data. That is, the client apparatus Cc transmits the data request of the video burst every 40 ms as shown by the references h2 to h4 and one frame of the video data as shown by the references V1 to V3 respectively. On the other hand, the client apparatus Cc transmits the data request of the audio burst every 32 ms as shown by the references 12 to i4 and one frame of the audio data as shown by the references A1 to A3 respectively.

In this embodiment, the video time interval data j1 and the audio time interval data k1 is transmitted before the first video data vd at the same first video burst V0 and before the first audio data ad at the same first audio burst A0. However, it is also possible that the video time interval data j1 is independently transmitted before the first video data vd and the audio time interval data k1 is independently transmitted before the first audio data ad.

In this embodiment, the transmitting data is controlled in accordance with the client's time data from the client's time data generation circuit 15, so that it is possible that different server apparatus Sc1 and Sc2 transmit the video burst and the audio burst.

Moreover, the capacity of the buffer memory 12 is determined to store N frames of the video data or the audio data, so that the transmission request may be effected every N frames, N being a natural number.

If the inter-frame prediction such as MPEG2 is used, an interval equal to or more than three frames is necessary to output the first frame. In this case, the data request for the video data is performed first and then, after two frames, the data request for the audio data is effected.

(FOURTH EMBODIMENT)

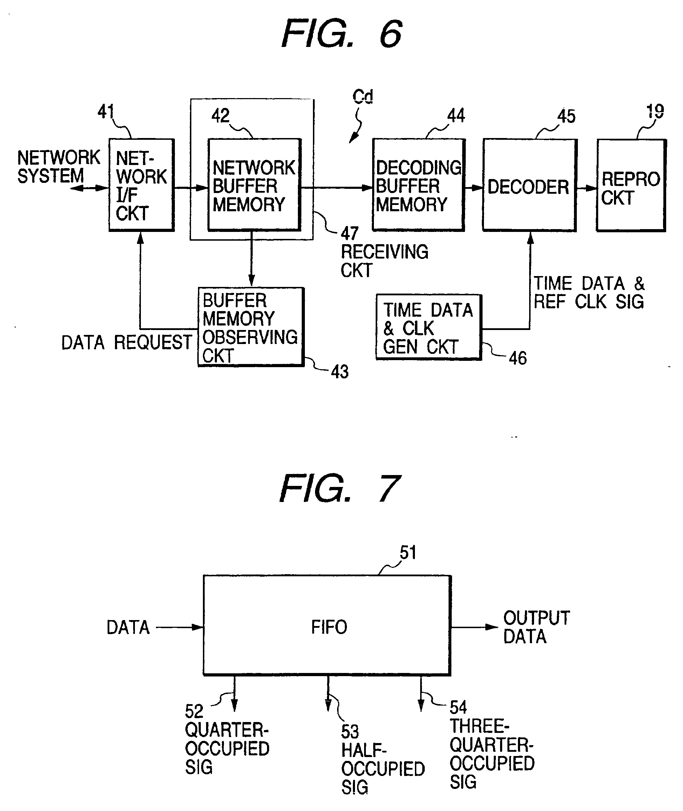

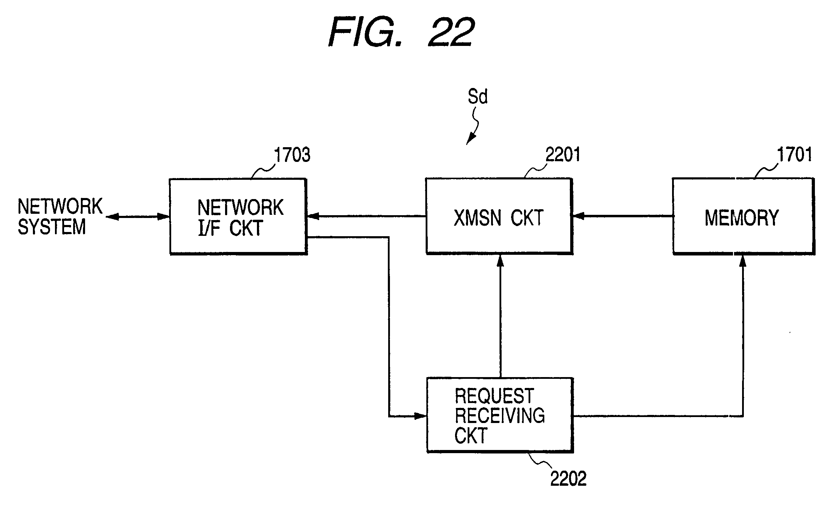

Fig. 6 is a block diagram of a client apparatus Cd of a fourth embodiment. Fig. 22 is a block diagram of a server apparatus Sd of a fourth embodiment.

A data transmission system of the fourth embodiment includes at least one server apparatus Sd and at least one client apparatus Cd coupled through the network system NE or NE'.

The server apparatus Sd includes a memory 1701 for storing data of at least one of coded video data and coded audio data, a transmitting circuit 2201 for intermittently transmitting a burst including the data read from the memory 1701 to the network system in response to data request, and a network interface circuit 1703, and a request receiving circuit 2202.

The client apparatus Cd includes a network interface circuit 41, a receiving circuit 47 including network buffer memory 42 for receiving the transmitted data in the burst directing to the client apparatus Cd, the network buffer memory 42 for temporally storing the received data and supplying the temporally stored data, a buffer observing circuit 43 for detecting an empty area of the stored data and transmitting the data request to the server Sd when the empty area is higher than a reference, a decoding buffer 44 for storing the data from the network buffer memory 42, a decoder 45 for decoding the data from the decoding buffer memory 44, a reproducing circuit 19 for reproducing the data from the network buffer memory 42 continuously in time base, and a time data and clock generation circuit 46 for generating time data of the client apparatus Cd and a reference clock signal.

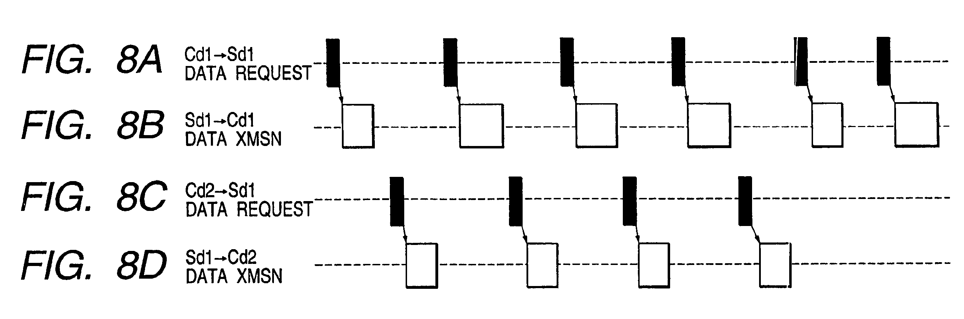

Fig. 7 is a block diagram of the fourth embodiment showing a network buffer memory 42 shown in Fig. 6.

The the network buffer memory 42 comprises a FIFO (First-In-First-Out) memory 51 for successively storing the received data and successively reading and outputting the received data and outputting a quarter-occupied signal 52, a half-occupied signal 53, and a three-quarter-occupied signal 54.

When a quarter of the capacity of the FIFO MEMORY 51 is occupied, the quarter-occupied signal 52 is outputted, when a half of the capacity is occupied, the half-occupied signal 53 is outputted, and when three quarters of the capacity is occupied, the three-quarter-occupied signal 54 is outputted.

The buffer memory observing circuit 43 detects that the empty area of the network buffer memory 42 is higher than the reference by logic operation among the quarter-occupied signal 52, the half-occupied signal 53, and the three-quarter-occupied signal 54.

The server apparatus Sd transmits the coded data to the client apparatus Cd in response to the data request from the client apparatus Cd to the server apparatus Sd. The client apparatus Cd receives the coded data from the server apparatus Sd in the network buffer memory 42. The coded data in the network buffer memory 42 is read and supplied to the decoder 45 through the decoding buffer memory 44. The decoder 45 decodes the coded data from the decoding buffer memory 44 on the basis of the time data and the reference clock signal from the time data and clock signal generation circuit 46 to output the video data and the audio data continuously in time base with a synchronous relation therebetween. The reproducing circuit 19 including a CRT and a speaker reproduces the video data and the audio data.

The buffer memory observing circuit 43 responsive to the quarter-occupied signal 52, the half-occupied signal 53, and the three-quarter-occupied signal 54 observes the empty area of the network buffer memory 42 and when the empty is higher than a half of the capacity for example, the buffer memory observing circuit 43 transmits data request to the server apparatus Sd.

Figs. 8A to 8D are timing charts of the fourth embodiment showing transmission timings between the server apparatus Sd1 and the client apparatus Cd1 and between the server apparatus Sd1 and the client apparatus Cd2.

For example, as shown in Figs. 8A and 8B, the client apparatus Cd1 transmits a data request to the server apparatus Sd1 by the buffer memory observing circuit 43 because the empty area is higher then a half of the capacity of the network buffer memory 42 (Fig. 8A). In response to this, the server apparatus Sd1 transmits a burst of which amount is less than a half of the capacity of the network buffer memory 42 to the client apparatus Cd1 (Fig. 8B).

Similarly, as shown in Figs. 8C and 8D, the client apparatus transmits a data request to the server apparatus Sd1 by the buffer memory observing circuit 43 because the empty area is higher then a half of the capacity of the network buffer memory 42 (Fig. 8C). In response to this, the server apparatus Sd1 transmits a burst of which amount is less than a half of the capacity of the network buffer memory 42 to the client apparatus Cd2 (Fig. 8D). The capacity of the network buffer memory 42 may be predetermined or registered in advance. If the capacity of the network buffer memory 42 is registered in advance, the capacity may be different between respective client apparatus.

As mentioned in the network buffer memory, there is coded data of which amount is higher than a predetermined amount, so that it is possible to reproduce the video data and the audio data in accordance with the client's time data.

(FIFTH EMBODIMENT)

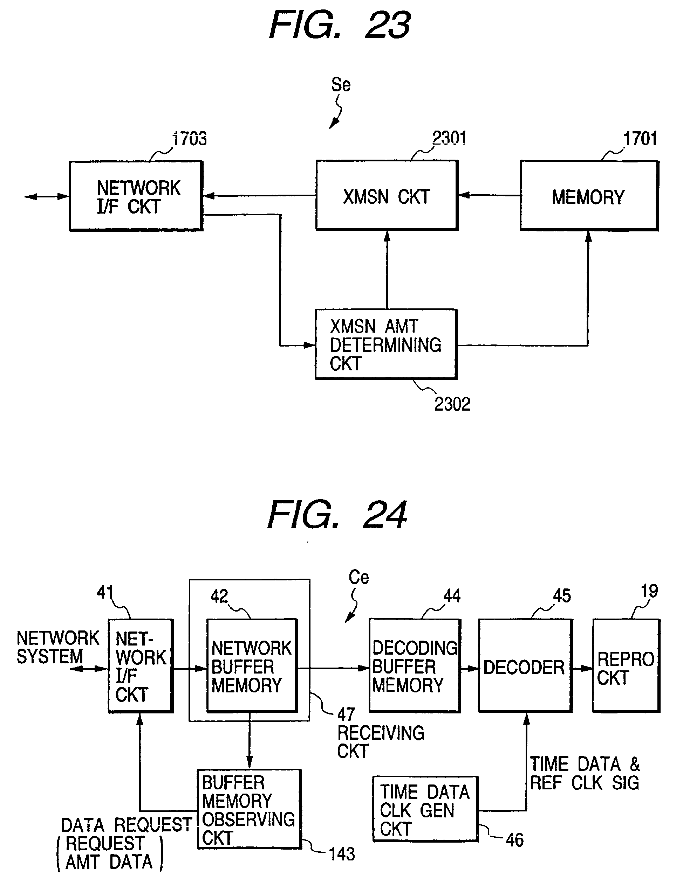

Fig. 23 is a block diagram of a server apparatus Se of a fifth embodiment. Fig. 24 is a block diagram of a client apparatus Ce of the fifth embodiment.

The data transmission system of the fifth embodiment is substantially the same as that of the fourth embodiment. The difference is that the client apparatus Ce transmits the data request including transmission requesting amount data corresponding to a size of the detected empty area and the server apparatus transmits the burst including coded data at an amount of data in a burst determined in accordance with the transmission requesting amount data from the client apparatus Ce.

More specifically, the buffer memory observing circuit 143 transmits the data request including the transmission request amount data and the transmission circuit 2301 controls an amount of data of the coded data to be transmitted in a burst in accordance with the transmission request amount data.

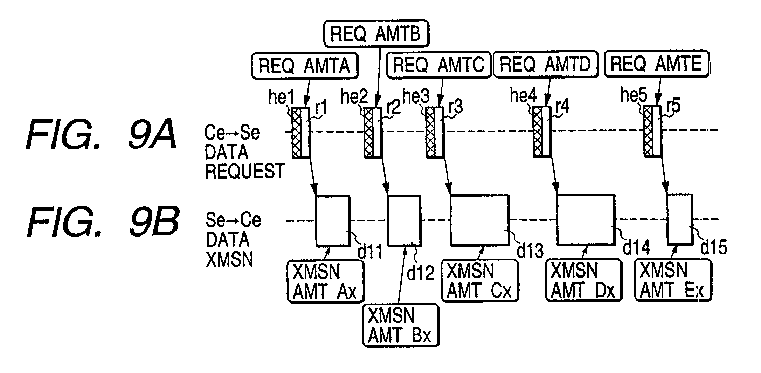

Figs. 9A and 9B are timing charts of the fifth embodiment showing transmission operation between the server apparatus Se and the client apparatus Ce.

The client Ce transmits a data request including header he1 indicative of data requesting and transmission request amount data r1 indicating an amount A which corresponds to the size of the empty area of the network buffer memory 42 at that instance. Then, the client apparatus Ce intermittently transmits following data requests including header he2 to he5 and transmission request amount data r2 to r5. The transmission request amount data r1 to r5 indicates maximums of requested transmission amounts are A to E.

When the server apparatus Se receives the data request, the server apparatus Se analyses the transmission request amount data r1 and determines the transmission amount d11 of the coded data in the burst by the transmission amount determining circuit 2301 and the transmission circuit 2301 transmits the burst d11 of which amount of data is Ax which is less than the maximum of the requested transmission amount A. In response to the following transmission request amount data r2 to r5, the transmission circuit 2301 transmits the bursts d12 to d15 of which amounts of data are Bx to Ex which are less than the maximums of the requested transmission amounts B to E. Therefore, there is a relation:

$$A > Ax, \; B > Bx, \; C > Cx, \; D > Dx, \; E > Ex$$

In this embodiment, the client apparatus Ce transmits the data request including the request amount data corresponding to the size of the empty area of the network buffer memory 42 and the server apparatus Se transmits a burst of which data amount is less than the requested transmission amount but corresponding to the requested transmission amount, so that if there is a much empty area in the network buffer memory 42, the more coded data is transmitted from the server apparatus Se to the client apparatus Ce. Therefore, jitter due to delay in transmission data is surely prevented.

A modification of the fifth embodiment will be described.

The server apparatus Se measures an amount of the data transferred to the decoding buffer memory 44 from when the client apparatus Ce transmits the data request to when the server apparatus Se transmits the burst. Then, the server apparatus Se adds the measured amount of the data to the transmission request amount (r1-r5) and then, the server apparatus Se transmits a burst of which data amount is less than the added amount.

(SIXTH EMBODIMENT)

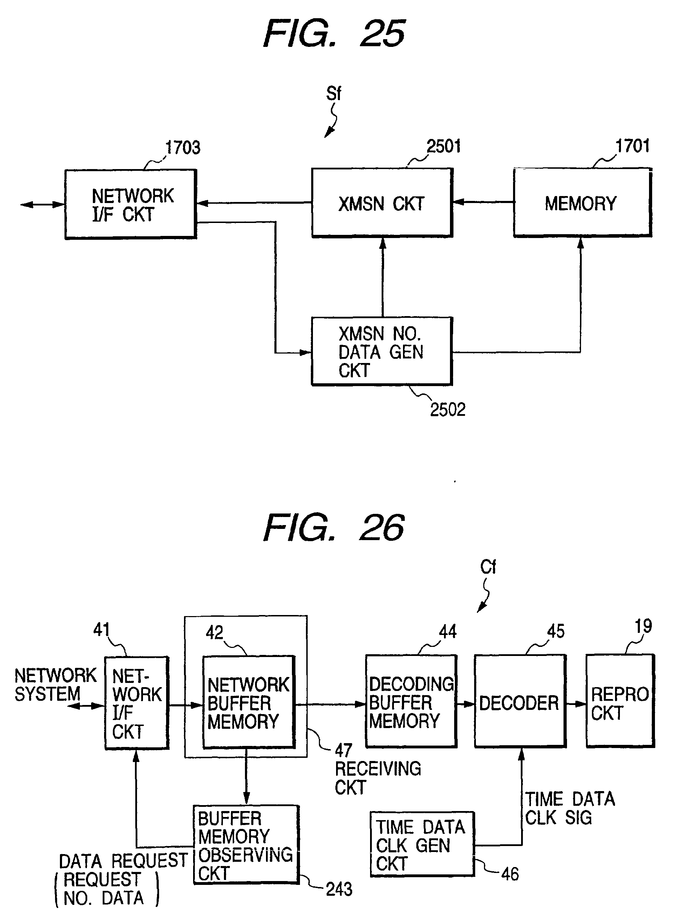

Fig. 25 is a block diagram of a server apparatus Sf of a sixth embodiment. Fig. 26 is a block diagram of a client apparatus Cf of the sixth embodiment.

The data transmission system of the sixth embodiment is substantially the same as that of the fifth embodiment. The difference is that a buffer memory observing circuit 243 of the client apparatus Cf transmits to a server apparatus Sf a data request including request number data of which number increases every data request and a transmission number data generation circuit 2502 generates transmission number data indicative a natural number which increases every transmission of the burst and the transmission circuit 2501 adds the transmission number data to coded data in the burst.

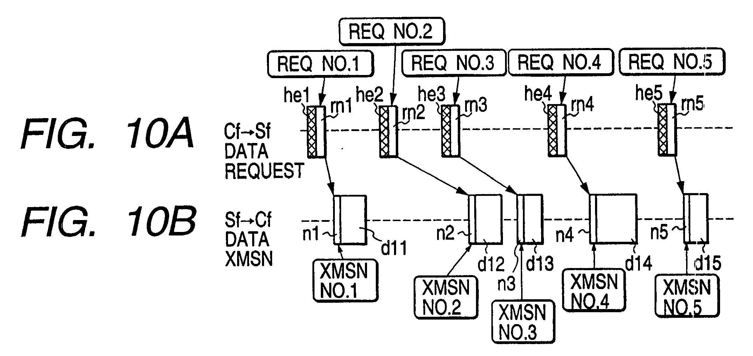

Figs. 10A and 10B are timing charts of the sixth embodiment showing transmission operation between the server apparatus Sf and the client apparatus Cf.

The client apparatus Cf transmits a data request including a header he1 indicative of the data request and transmission number data rn1 indicative of request number 1 when the empty area of the network buffer memory 42 is higher than the reference. Then, the client apparatus Cf intermittently transmits following data requests including header he2 to he5 and request number data rn2 to rn5 respectively.

When the server apparatus Sf receives the data request, the transmission number data generation circuit 2502 generates transmission number data n1-n5 and the transmission circuit 2501 adds the transmission number data n1-n5 to coded data d11-d15.

In this embodiment, the client apparatus Cf can detect which data request does the received burst respond to, so that if one of successive burst of coded data is delayed due to busy traffic, the client apparatus can rearrange the bust of the coded data to correctly reproduce the video data and the audio data. Moreover, there is the case that a data request is transmitted before the coded data is transmitted from the server apparatus to the client apparatus Cf in response to the previous data request. In such a case, the client apparatus Cf can judge which data request does the received burst responds to, so that receiving bursts of data is controlled.

(SEVENTH EMBODIMENT)

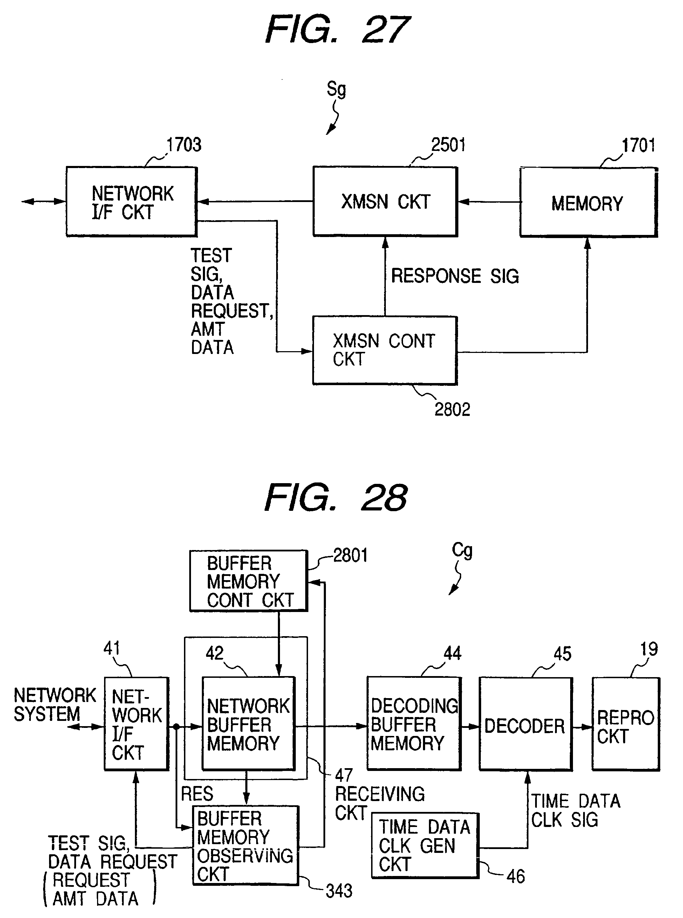

Fig. 27 is a block diagram of a server apparatus Sg of a seventh embodiment. Fig. 28 is a block diagram of a client apparatus Cg of the seventh embodiment.

The data transmission system of the seventh embodiment is substantially the same as that of the fourth embodiment. The difference is that the buffer memory observing circuit 343 generates a test signal TEST and transmitting the test signal TEST to the server Sg when the empty area is higher than the reference, a transmission control circuit 2802 receives the test signal TEST in addition to data request and immediately transmits a response signal re at least once and the buffer memory observing circuit 343 measures a turnaround interval, that is, from transmission of the test signal TEST to receiving the response signal re and determines an amount of the coded data in a burst in accordance with the measured turnaround interval.

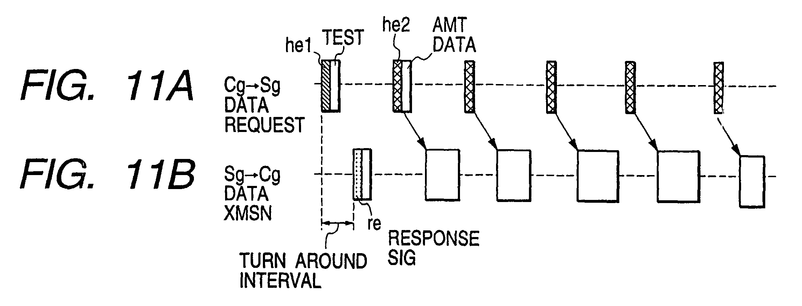

Figs. 11A and 11B are timing charts of the seventh embodiment showing transmission operation between the server apparatus Sg and the client apparatus Cg.

The client Cg transmits the test signal TEST with the header he1 when the empty area of the network buffer memory 42 is higher than the reference. Then, the server apparatus Sg transmits a response signal re with a header.

The buffer memory observing circuit 343 receives the response signal re and measures the turnaround interval and determines the request amount of coded data and transmits request amount data AMT with a header he2 to the server apparatus Sg. The server apparatus Sg transmits the burst of which data amount is determined in accordance with the request amount data AMT.

Modifications will be described.

In this embodiment, as shown in Fig. 28, the client apparatus Cg may further include a buffer memory control circuit 2801 for controlling a capacity of the network buffer memory 42 in accordance with the measured turnaround interval or a transmission bit rate.

In this embodiment, the test signal TEST is transmitted when the empty area of the network buffer memory is higher than the reference. However, it is also possible that the test signal TEST is transmitted when the empty area of the network buffer memory is higher than the reference every when a predetermined interval has passed.

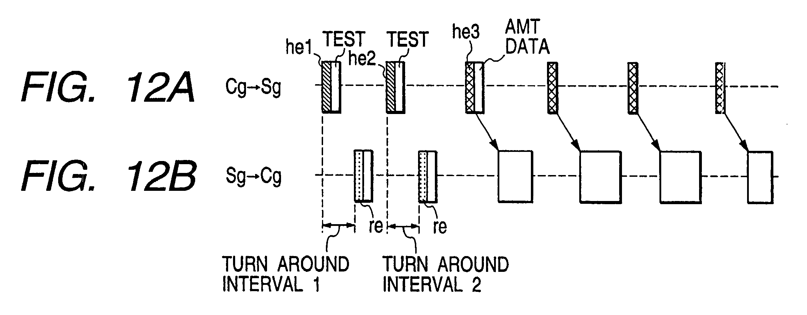

Figs. 12A and 12B are timing charts of a modification in the seventh embodiment showing transmission operation between the server apparatus and the client apparatus.

The test signal TEST is transmitted from the client apparatus Cg twice and the server apparatus Sg receives every test signal TEST and transmits a response signal re in response to every reception of the test signal TEST. Then, the buffer memory observing circuit 343 averages the measured turnaround intervals. Moreover, the buffer memory observing circuit 343 may effect other statistic operation to obtain a variance for example to determine determine the turn around interval and to estimate an amount of jitter.

In this modification, the test signal TEST is transmitted from the client apparatus Cg twice. However, it is also possible to the test signal TEST is transmitted from the client apparatus Cg more than twice.

(EIGHTH EMBODIMENT)

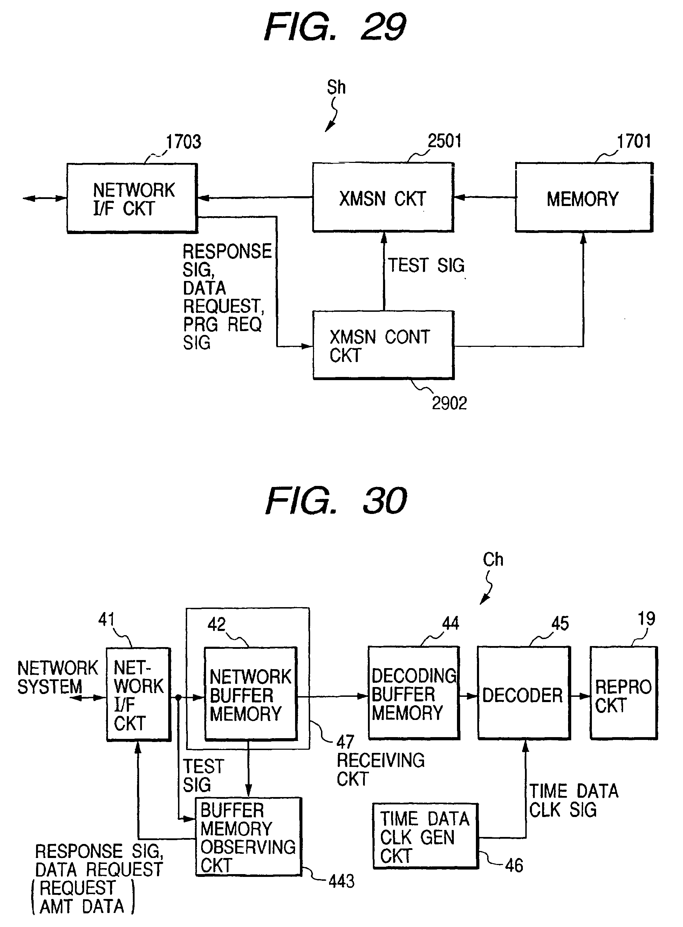

Fig. 29 is a block diagram of a server apparatus Sh of an eighth embodiment. Fig. 30 is a block diagram of a client apparatus Ch of the eighth embodiment.

The data transmission system of the eighth embodiment is substantially the same as that of the seventh embodiment. The difference is that the test signal TEST is transmitted from the server apparatus Sh to the client apparatus Ch and the response signal re is transmitted from the client apparatus Ch to the server apparatus Sh.

More specifically, the transmission control circuit 2902 generates a test signal TEST and transmitting the test signal TEST to the Client apparatus Ch in response to a program request signal from the client apparatus Ch. The buffer memory observing circuit 434 transmits a response signal re to the server apparatus Sh in response to the test signal TEST from the server apparatus Sh. The transmission control circuit 2902 receives the response signal re and measures a turnaround interval. This operation is repeated to obtain the turnaround interval 2.

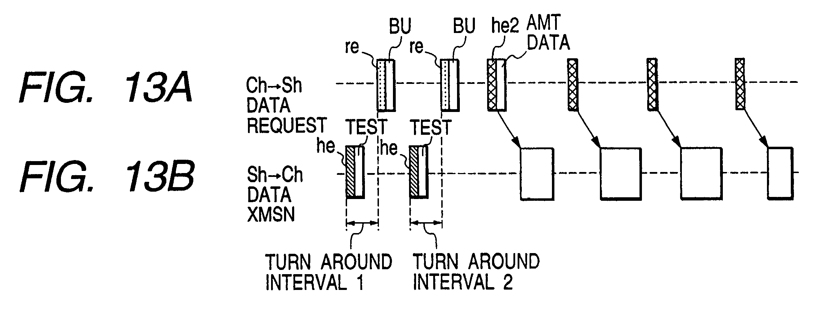

Figs. 13A and 13B are timing charts of the eighth embodiment showing transmission operation between the server apparatus Sh and the client apparatus Ch.

The transmission control circuit 2902 generates the test signal TEST and transmitting the test signal TEST to the client apparatus Ch in response to the program request signal from the client apparatus Ch. The buffer memory observing circuit 434 transmits a response signal re with data BU indicative of the capacity of the memory buffer memory 42 or the like to the server apparatus in response to the test signal TEST from the server apparatus Sh. The transmission control circuit 2902 receives the response signal re and measures a turnaround interval 1. This operation is repeated to obtain the turnaround interval by effecting a statistic operation from the turnaround interval 1 and the turnaround interval 2. The transmission control circuit 2902 calculates the transmission bit rate in accordance with data BU indicative of the capacity of network buffer memory 42 and compensates request amount data from the client apparatus Ch in accordance with the transmission bit rate. That is, the transmission control circuit 2902 determines the amount of data in the network buffer memory 42 in response to a data request, wherein the bit rate is limited under the calculated transmission bit rate.

Setting the bit rate to a suitable value determined in accordance with the delay in the network and the capacity of the network buffer memory 42 prevents the fluctuation of the delay and the jitter.

When the capacity of the network buffer memory 42 is fixed, a degree of absorbing jitter depends on the bit rate. For example if there is a jitter of one second peak to peak and there is the capacity of 4M bits in the network buffer memory 42, the maximum bit rate is less than 4 Mbit/ sec to absorb jitters. That is, in this embodiment, if the delay interval is long and jitters occur frequently, the bit rate is limited, i.e., the resolution is made low.

The client Ch transmits the test signal TEST with the header he1 when the empty area of the network buffer memory 42 is higher than the reference. Then, the server apparatus Sh transmits a response signal re with a header.

The buffer memory observing circuit 443 receives the response signal re and measures the turnaround interval and determines the request amount of coded data and transmits request amount data AMT with a header he2 to the server apparatus Sh. The server apparatus Sh transmits the burst of which data amount is determined in accordance with the request amount data AMT.

(NINTH EMBODIMENT)

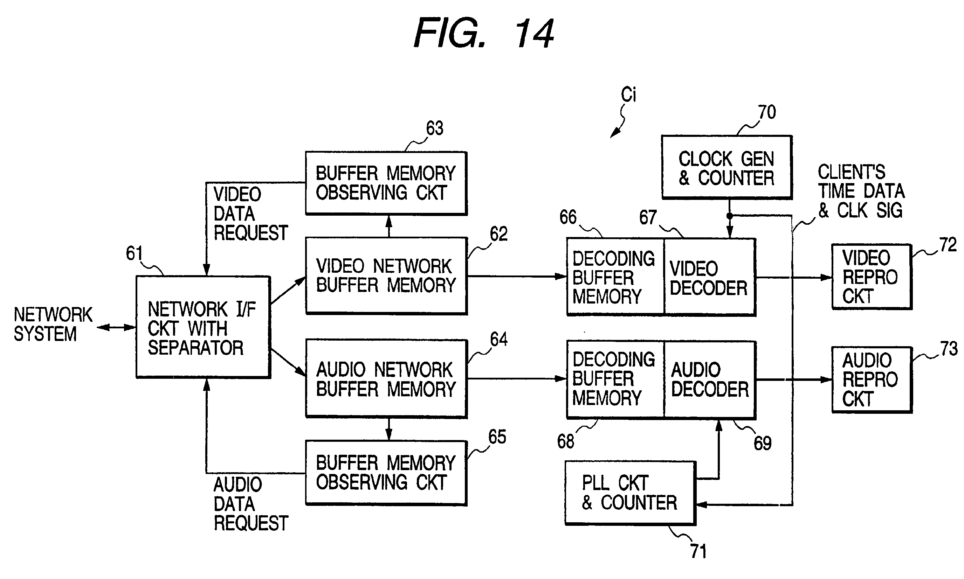

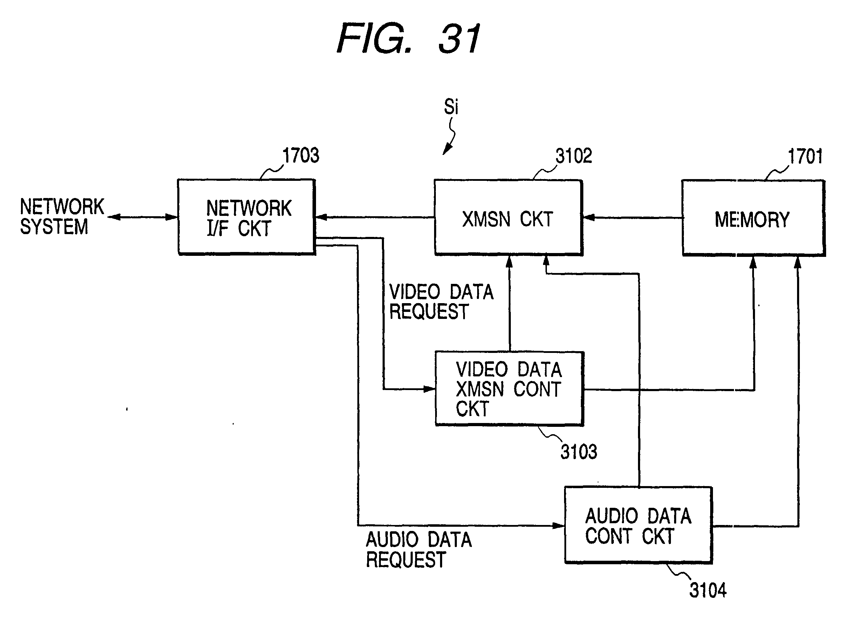

Fig. 31 is a block diagram of a server apparatus Si of a ninth embodiment. Fig. 14 is a block diagram of a client apparatus Ci of the ninth embodiment.

The data transmission system of the ninth embodiment is substantially the same as that of the fourth embodiment. The difference is that the server apparatus Si transmits the video data and the audio data independently and the client apparatus Ci of the ninth embodiment can receive the video data and the audio data from the same or different server apparatus Si at the same time.

More specifically, the server apparatus Si includes a memory 1701 for storing data of at least one of coded video data and coded audio data, a transmitting circuit 3102 for intermittently transmitting a burst including the data read from the memory 1701 to the network system in response to a data request, and a network interface circuit 1703, a video data transmission control circuit 3103, and an audio data transmission control circuit 3104.

The video data transmission control circuit 3103 operates the transmission circuit 3102 and the memory 1701 to transmit the video data in response to a video data request and independently the audio data transmission control circuit 3104 operates the transmission circuit 3102 and the memory 1701 to transmit the audio data in response to an audio data request.

The client apparatus Ci includes a network interface circuit 61 with a separator, clock generation and counter circuit 70, and a PLL circuit and counter 71, a video system, and an audio system. The video system includes a video network buffer memory 62 for receiving the transmitted video data in the burst directing to the client apparatus Ci from the network interface circuit 61, a buffer memory observing circuit 63 for detecting an empty area of the stored video data in the video network buffer memory 62 and transmitting the data request to the server apparatus Si when the empty area is higher than a reference, a decoding buffer 66 for storing the data from the video network buffer memory 62, a video decoder 67 for decoding the video data from the decoding buffer memory 66, and a video reproducing circuit 72 for reproducing the decoded video data from continuously in time base.

The audio system includes a audio network buffer memory 64 for receiving the transmitted audio data in the burst directing to the client apparatus Ci from the network interface circuit 61, a buffer memory observing circuit 65 for detecting an empty area of the stored audio data in the audio network buffer memory 64 and transmitting an audio data request to the server Si2 when the empty area is higher than a reference, a decoding buffer memory 68 for storing the audio data from the audio network buffer memory 64, and an audio decoder 69 for decoding the audio data from the decoding buffer memory 68, and an audio reproducing circuit 73 for reproducing the decoded audio data continuously in time base.

The network interface circuit 61 receives the video data and the audio data independently, that is, receives the video data and the audio data from different server apparatus Si1 and Si2 and supplies the received video data to the video network buffer memory 62 and supplies the received audio data to the audio network buffer memory 64, so that the video data and the audio data can be received from the different server apparatus Si1 and Si2.

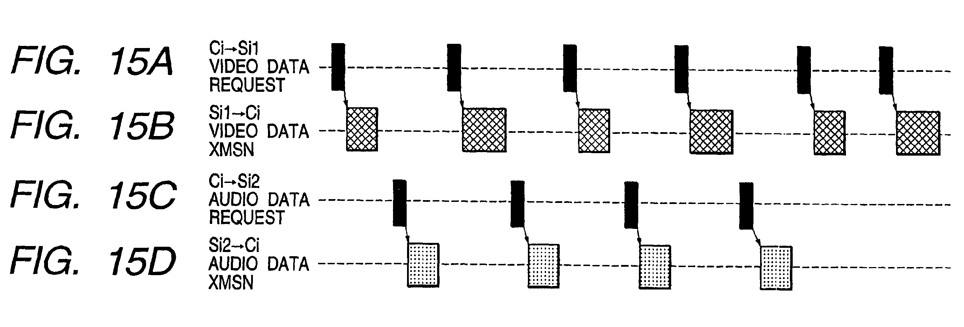

Figs. 15A to 15D are timing charts of the ninth embodiment showing the video data transmission operation between the server apparatus Si1 and the client apparatus Ci1 and the audio data transmission operation between the server apparatus Si2 and the client apparatus Ci1.

In the above-mentioned embodiment the fourth to ninth embodiments and their modifications can be combined each other.

**Claims**

1. A data transmission system comprising:

at least one server apparatus and at least one client apparatus, the server apparatus comprising:

a memory (1701) that is adapted to store coded data obtained by coding at least one of moving picture image data and audio data; and
a data transmitter (1702) that is adapted to transmit intermittently burst portions of said coded data read from said memory, said burst portions being transmitted in respective bursts to a network system; and
the client apparatus comprising:

a receiver (11) which receives the burst portions of the coded data transmitted from the server apparatus in the bursts directed to the client apparatus; and
a decoder (18) that is adapted to decode the burst portions of the coded data to reproduce the moving picture image data or the audio data in a time base,
**characterised in that** said server apparatus further comprises:

a server time data generator (1704) that is adapted to generate server's time data for each of the burst portions of the coded data read out from said memory, the server's time data being generated for each burst portion of the coded data and indicating a transmission time of a next burst portion of the coded data to be transmitted to the client apparatus after transmission of a present burst portion of the coded data for which the server's time data was generated, the transmission times indicated by the pieces of server's time data being generated to provide continuous reproduction of the moving picture image data or the audio data by the decoder of the client apparatus; and
an attaching unit (1702) that is adapted to attach said server's time data generated for each burst portion of the coded data to the respective burst portion of said coded data for which it was generated, and said client apparatus further comprising:

an extractor (13) that is adapted to extract said server's time data from each burst portion of the coded data received in said receiver, a client's time data generator (15) that is adapted to generate client's time data indicative of a present time of said client apparatus, and a data requesting unit (21) that is adapted to transmit, each time the extractor extracts current server's time data from a current burst portion of the coded data, a request for a next burst portion of the coded data subsequent to the current burst portion of the coded data to said server apparatus at a request timing determined in accordance with said current server's time data and a present time indicated by said client's time data, the server apparatus outputting the next burst portion of the coded data to the client apparatus in response to the request.

2. The data transmission system as claimed in claim 1, wherein said decoder decodes in response to said client's time data, and said data requesting unit comprises:

a subtractor (14) for obtaining a difference between said server's time data and said client's time data when said server's time data are received,
request timing determining means (17) for compensating a relation between said client's time data and the received server's time data in accordance with said difference and determining said request timing in accordance with said client's time data and the compensated relation, and
request transmission means (20) responsive to said request timing determining means for generating and transmitting said request to said server apparatus.

3. The data transmission system as claimed in claim 1, wherein
the memory of the server apparatus stores coded moving picture image data and coded audio data,
the data transmitter of the server apparatus transmits intermittently a video burst including a burst portion of said coded moving picture image data and an audio burst including a burst portion of the coded audio data read from said memory to the network system respectively,
the receiver of the client apparatus receivers said video and audio bursts directing to said client apparatus,
the decoder of the client apparatus decodes each of the burst portions of said coded moving picture image data in said video bursts and each of the burst portions of said coded audio data in said audio bursts,
the server time data generator of said server apparatus includes:

> a video time data generator (1804) that is adapted to generate video time.data for each of the video bursts, the video time data generated for each video burst indicating a transmission time of the other video burst to be transmitted to the client apparatus after transmission of the each video burst, the transmission times indicated by the pieces of video time data being generated to provide continuous reproduction of the moving picture image data by the decoder of the client apparatus; and
>
> an audio time data generator (1805) that is adapted to generate audio time data for each of the audio bursts, the audio time data generated for each audio burst indicating a transmission time of the other audio burst to be transmitted to the client apparatus after transmission of the each audio burst, the transmission times indicated by the pieces of audio time data being generated to provide continuous reproduction of the audio data by the decoder of the client apparatus;

the attaching unit attaches said video time data generated for each video burst to the each video burst, and attaches said audio time data generated for each audio burst to the each audio burst,
the extractor of the client apparatus extracts, each time the receiver receives a current video burst, video time data from said current video burst and extracts, each time the receiver receives an audio burst, audio time data from said current audio burst, and
the data requesting unit of the client apparatus including:

> a first data requesting unit (1821) that is adapted to transmit, each time the extractor extracts current video time data from a current video burst, a first request for a next video burst subsequent to the current video burst at a request timing determined in accordance with the current video time data and a present time indicated by said client's time data; and
>
> a second data requesting unit (1921) that is adapted to transmit, each time the extractor extracts current audio time data from a current audio burst, a second request for a next audio burst subsequent to the current audio burst at a request timing determined in accordance with the current audio time data and a present time indicated by said client's time data.

4. The data transmission system as claimed in claim 3, wherein said first data requesting unit comprises:

> a first subtractor (1814) for obtaining a first difference between said video time data and said client's time data when said video time data is received,
> a first compensator (1817) for compensating a first relation between said client's time data and the received video time data in accordance with said first difference, and
> a first requesting timing determining unit (1817) for determining said first request timing in accordance with said client's time data and the compensated first relation, said second data requesting unit comprises:
>
> a second subtractor (1914) for obtaining a second difference between said audio time data and said client's time data when said audio time data is received,
> a second compensator (1917) for compensating a second relation between said client's time data and the received audio time data in accordance with said second difference, and
> a second requesting timing determining unit (1917) for determining said second request timing in accordance with said client's time data and the compensated second relation.

5. A data transmission system comprising:

> at least one server apparatus and at least one client apparatus, the server apparatus comprising:
>
> > a memory (2001) that is adapted to store coded data obtained by coding at least one of moving picture image data and audio data; and
> > a data transmitter (1702) that is adapted to transmit intermittently burst portions of said coded data read from said memory, said burst portions being transmitted in respective bursts to a network system; and the client apparatus comprising:

a receiver (11) which receives the burst portions of the coded data transmitted from the server apparatus in the bursts directed to said client apparatus; and

a decoder (18) that is adapted to decode the burst portions of the coded data to reproduce the moving picture image data or the audio data in a time base, **characterized in that** said server apparatus further comprises:

a time interval data generator (2004) which generates server time interval data that indicates time intervals of transmission of the burst portions of the coded data to enable the client apparatus to continuously reproduce at least one of the moving picture image data and the audio data;

a data attaching unit (2002) which attaches said time interval data to the first burst portion of the coded data; and

a data transmitter (2002) which intermittently transmits the first portion of the coded data with said time interval data and the other portions of the coded data read from the memory to a network in response to requests from the client apparatus, said client apparatus further comprises:

extraction means (2113) for extracting said server time interval data from the first portion of the coded data received by the receiver;

a clock circuit which generates a reference clock signal; and

a data requesting unit (2121) which transmits a request to said server apparatus for transmission of a next burst portion of the coded data to said client apparatus every requested client's time interval determined in accordance with said extracted server time interval data and a client time indicated by said reference clock signal to periodically transmit the requests to said server apparatus, and

the decoder continuously decodes the portions of the coded data received by the receiver to reproduce at least one of the moving picture image data and the audio data without intermission in a client time base.

6. A reproduction apparatus, which is adapted to be connected to a network, comprising:

a receiver (11) which receives burst portions of coded data, obtained by coding at least one of moving picture image data and audio data, from a server through the network; and

a decoder (18) which decodes the burst portions of the coded data received by the receiver to reproduce the moving picture image data or the audio data, **characterized in that**

server's time data is attached to each of the burst portions of the coded data, the server's time data attached to each burst portion of the coded data being indicative of a transmission time of the other portion of the coded data to be transmitted subsequent to the each portion of the coded data, the apparatus further comprises: an extractor (13) which extracts the server's time data from each of the burst portions of the coded data received by the receiver;

a clock generator (15) which generates a reference clock signal; and

a data requesting unit (21) which transmits, each time the extractor extracts current server's time data from a current burst portion of the coded data, a request for a next burst portion of the coded data subsequent to the current portion of the coded data to the server at a request client's time determined in accordance with the extracted current server's time data and a present time indicated by the reference clock signal, and the decoder continuously decodes the burst portions of the coded data transmitted from the server whereby to reproduce the moving picture image data or the audio data in a time base of the reproduction apparatus without intermission of the reproduction.

7. A reproduction apparatus to be connected to a network to receive burst portions of coded data obtained by coding at least one of moving picture image data and audio data, comprising:

a receiver (11) which receives the burst portions of the coded data from a server through the network; and

a decoder (18) which decodes the burst portions of the coded data received by the receiver to reproduce the moving picture image data or the audio data, **characterized in that**

the start of the burst portions of the coded data includes interval data indicative of time intervals of transmission of the burst portions from the server to continuously reproduce the moving picture image data or the audio data, the apparatus further comprises:

an extractor (2113) which extracts the interval data from the top of the burst portions received by the receiver;

a clock generator (15) which generates a reference clock signal; and

a data requesting unit (2121) which transmits, each time the receiver receives a current burst portion, a request for a next burst portion subsequent to the current burst portion to the server at a request time determined in accordance with the interval data extracted by the extractor and a present time indicated by the reference clock signal to periodically receive the burst portions in the receiver at the time intervals indicated by the interval data, and

the decoder (18) continuously decodes the burst portions transmitted from the server in response to the requests to continuously reproduce at least one of the moving picture image data and the audio data in a time base of the reproduction apparatus.

**Patentansprüche**

1. Datenübertragungssystem, umfassend:

mindestens eine Server-Vorrichtung und mindestens eine Client-Vorrichtung, wobei die Server-Vorrichtung umfasst:

einen Speicher (1701), der geeignet ist, um durch Codieren von Bewegtbild-Abbildungsdaten und/oder Audiodaten erhaltene codierte Daten zu speichern; und

einen Datensender (1702), der geeignet ist, um Burst-Abschnitte der aus dem Speicher ausgelesenen codierten Daten intermittierend zu übertragen, wobei die Burst-Abschnitte in jeweiligen Bursts zu einem Netzwerksystem übertragen werden; und

wobei die Client-Vorrichtung umfasst:

einen Empfänger (11), der die Burst-Abschnitte der von der Server-Vorrichtung in den die an die Client-Vorrichtung gerichteten Bursts übertragenen codierten Daten empfängt; und

eine Decodiereinrichtung (18), die geeignet ist, um die Burst-Abschnitte der codierten Daten zu decodieren, um die Bewegtbild-Abbildungsdaten oder die Audiodaten in einer Zeitbasis wiederzugeben, **dadurch gekennzeichnet, dass** die Server-Vorrichtung ferner umfasst:

einen Server-Zeitdatengenerator (1704), der geeignet ist, um Zeitdaten des Servers für jeden der Burst-Abschnitte der aus dem Speicher ausgelesenen codierten Daten zu erzeugen, wobei die Zeitdaten des Servers für jeden Burst-Abschnitt der codierten Daten erzeugt werden und eine Übertragungszeit eines nächsten Burst-Abschnitts der codierten Daten angeben, der nach einer Übertragung eines gegenwärtigen Burst-Abschnitts der codierten Daten, für die die Zeitdaten des Servers erzeugt wurden, zu der Client-Vorrichtung übertragen werden soll, wobei die Übertragungszeiten, die durch die Teile der Zeitdaten des Servers angegeben werden, erzeugt werden, um eine kontinuierliche Wiedergabe der Bewegtbild-Abbildungsdaten oder der Audiodaten durch die Decodiereinrichtung der Client-Vorrichtung bereitzustellen; und

eine Anbringungseinheit (1702), die geeignet ist, um die für jeden Burst-Abschnitt der codierten Daten erzeugten Zeitdaten des Servers an den jeweiligen Burst-Abschnitt der codierten Daten anzubringen, für die sie erzeugt wurden, und die Client-Vorrichtung ferner umfasst:

eine Extrahiereinrichtung (13), die geeignet ist, um die Zeitdaten des Servers von jedem Burst-Abschnitt der in dem Empfänger empfangenen codierten Daten zu extrahieren, einen Client-Zeitdatengenerator (15), der geeignet ist, um Zeitdaten des Clients zu erzeugen, die eine gegenwärtige Zeit der Client-Vorrichtung angeben, und eine Datenanfrageeinheit (21), die geeignet ist, um jedes Mal, wenn die Extrahiereinrichtung momentane Zeitdaten des Servers von einem momentanen Burst-Abschnitt der codierten Daten extrahiert, eine Anfrage für einen nächsten Burst-Abschnitt der codierten Daten anschließend an den momentanen Burst-Abschnitt der codierten Daten zu einem Anfrage-Timing an die Server-Vorrichtung zu übertragen, das gemäß den momentanen Zeitdaten des Servers und einer gegenwärtigen Zeit ermittelt wird, die durch die Zeitdaten des Clients angegeben ist, wobei die Server-Vorrichtung den nächsten Burst-Abschnitt der codierten Daten in Ansprechen auf die Anfrage an die Client-Vorrichtung ausgibt.

2. Datenübertragungssystem nach Anspruch 1, wobei die Decodiereinrichtung in Ansprechen auf die Zeitdaten des Clients decodiert und die Datenanfrageeinheit umfasst:

einen Subtrahierer (14) zum Erhalten einer Differenz zwischen den Zeitdaten des Servers und den Zeitdaten des Clients, wenn die Zeitdaten des Servers empfangen werden,

ein Anfrage-Timing-Ermittlungsmittel (17) zum Kompensieren einer Beziehung zwischen den Zeitdaten des Clients und den empfangenen Zeitdaten des Servers gemäß der Differenz und Ermitteln des Anfrage-Timings gemäß den Zeitdaten des Clients und der kompensierten Beziehung, und

ein Anfrageübertragungsmittel (20), das auf das Anfrage-Timing-Ermittlungsmittel anspricht, um die Anfrage zu erzeugen und an die Server-Vorrichtung zu übertragen.

3. Datenübertragungssystem nach Anspruch 1, wobei
der Speicher der Server-Vorrichtung codierte Bewegtbild-Abbildungsdaten und codierte Audiodaten speichert,
der Datensender der Server-Vorrichtung einen Video-Burst einschließlich eines Burst-Abschnitts der codierten Bewegtbild-Abbildungsdaten bzw. einen Audio-Burst einschließlich eines Burst-Abschnitts der aus dem Speicher ausgelesenen codierten Audiodaten intermittierend an das Netzwerksystem überträgt,
der Empfänger der Client-Vorrichtung die an die Client-Vorrichtung gerichteten Video- und Audio-Bursts empfängt,
die Decodiereinrichtung der Client-Vorrichtung jeden der Burst-Abschnitte der codierten Bewegtbild-Abbildungsdaten in den Video-Bursts und jeden der Burst-Abschnitte der codierten Audiodaten in den Audio-Bursts decodiert,
der Server-Zeitdatengenerator der Server-Vorrichtung umfasst:

einen Videozeitdatengenerator (1804), der geeignet ist, um Videozeitdaten für jeden der Video-Bursts zu erzeugen, wobei die für jeden Video-Burst erzeugten Videozeitdaten eine Übertragungszeit des anderen Video-Bursts angeben, der nach der Übertragung des jeweiligen Video-Bursts an die Client-Vorrichtung übertragen werden soll, wobei die durch die Teile der Videozeitdaten angegebenen Übertragungszeiten erzeugt werden, um eine kontinuierliche Wiedergabe der Bewegtbild-Abbildungsdaten durch die Decodiereinrichtung der Client-Vorrichtung bereitzustellen, und

einen Audiozeitdatengenerator (1805), der geeignet ist, um Audiozeitdaten für jeden der Video-Bursts zu erzeugen, wobei die für jeden Audio-Burst erzeugten Audiozeitdaten eine Übertragungszeit des anderen Audio-Bursts angeben, der nach der Übertragung des jeweiligen Audio-Bursts an die Client-Vorrichtung übertragen werden soll, wobei die durch die Teile der Audiozeitdaten angegebenen Übertragungszeiten erzeugt werden, um eine kontinuierliche Wiedergabe der Audiodaten durch die Decodiereinrichtung der Client-Vorrichtung bereitzustellen;

wobei die Anbringungseinheit die für jeden Video-Burst erzeugten Videozeitdaten an den jeweiligen Video-Burst anbringt und die für jeden Audio-Burst erzeugten Audiozeitdaten an den jeweiligen Audio-Burst anbringt,

wobei die Extrahiereinrichtung der Client-Vorrichtung jedes Mal, wenn der Empfänger einen momentanen Video-Burst empfängt, Videozeitdaten von dem momentanen Video-Burst extrahiert und jedes Mal, wenn der Empfänger einen Audio-Burst empfängt, Audiozeitdaten von dem momentanen Audio-Burst extrahiert, und

wobei die Datenanfrageeinheit der Client-Vorrichtung umfasst:

eine erste Datenanfrageeinheit (1821), die geeignet ist, um jedes Mal, wenn die Extrahiereinrichtung momentane Videozeitdaten von einem momentanen Video-Burst extrahiert, eine erste Anfrage für einen nächsten Video-Burst anschließend an den momentanen Video-Burst zu einem Anfrage-Timing zu übertragen, das gemäß den momentanen Videozeitdaten und einer durch die Zeitdaten des Clients angegebenen gegenwärtigen Zeit ermittelt wird; und

eine zweiten Datenanfrageeinheit (1921), die geeignet ist, um jedes Mal, wenn die Extrahiereinrichtung momentane Audiozeitdaten von einem momentanen Audio-Burst extrahiert, eine zweite Anfrage für einen nächsten Audio-Burst anschließend an den momentanen Audio-Burst zu einem Anfrage-Timing zu übertragen, das gemäß den momentanen Audiozeitdaten und einer durch die Zeitdaten des Clients angegebenen gegenwärtigen Zeit ermittelt wird.

4. Datenübertragungssystem nach Anspruch 3, wobei die erste Datenanfrageeinheit umfasst:

einen ersten Subtrahierer (1814) zum Erhalten einer ersten Differenz zwischen den Videozeitdaten und den Zeitdaten des Clients, wenn die Videozeitdaten empfangen werden,

eine erste Kompensiereinrichtung (1817) zum Kompensieren einer ersten Beziehung zwischen den Zeitdaten des Clients und den empfangenen Videozeitdaten gemäß der ersten Differenz, und

eine erste Anfrage-Timing-Ermittlungseinheit (1817) zum Ermitteln des ersten Anfrage-Timings gemäß den Zeitdaten des Clients und der kompensierten ersten Beziehung, wobei die zweite Datenanfrageeinheit umfasst:

einen zweiten Subtrahierer (1914) zum Erhalten einer zweiten Differenz zwischen den Audiozeitdaten und den Zeitdaten des Clients, wenn die Audiozeitdaten empfangen werden,
eine zweite Kompensiereinrichtung (1917) zum Kompensieren einer zweiten Beziehung zwischen den Zeitdaten des Clients und den empfangenen Audiozeitdaten gemäß der zweiten Differenz, und
eine zweite Anfrage-Timing-Ermittlungseinheit (1917) zum Ermitteln des zweiten Anfrage-Timings gemäß den Zeitdaten des Clients und der kompensierten zweiten Beziehung.

5. Datenübertragungssystem, umfassend:

mindestens eine Server-Vorrichtung und mindestens eine Client-Vorrichtung, wobei die Server-Vorrichtung umfasst:

einen Speicher (2001), der geeignet ist, um durch Codieren von Bewegtbild-Abbildungsdaten und/oder Audiodaten erhaltene codierte Daten zu speichern; und
einen Datensender (1702), der geeignet ist, um Burst-Abschnitte der aus dem Speicher ausgelesenen codierten Daten intermittierend zu übertragen, wobei die Burst-Abschnitte in jeweiligen Bursts zu einem Netzwerksystem übertragen werden; und
wobei die Client-Vorrichtung umfasst:

einen Empfänger (11), der die Burst-Abschnitte der von der Server-Vorrichtung in den an die Client-Vorrichtung gerichteten Bursts übertragenen codierten Daten empfängt; und
eine Decodiereinrichtung (18), die geeignet ist, um die Burst-Abschnitte der codierten Daten zu decodieren, um die Bewegtbild-Abbildungsdaten oder die Audiodaten in einer Zeitbasis wiederzugeben, **dadurch gekennzeichnet, dass** die Server-Vorrichtung ferner umfasst:

einen Zeitintervall-Datengenerator (2004), der Server-Zeitintervalldaten erzeugt, die Zeitintervalle einer Übertragung der Burst-Abschnitte der codierten Daten angeben, um der Client-Vorrichtung zu ermöglichen, Bewegtbild-Abbildungsdaten und/oder Audiodaten kontinuierlich wiederzugeben; und
eine Datenanbringungseinheit (2002), die die Zeitintervalldaten an den ersten Burst-Abschnitt der codierten Daten anbringt; und
einen Datensender (2002), der den ersten Abschnitt der codierten Daten mit den Zeitintervalldaten und die anderen Abschnitte der aus dem Speicher ausgelesenen codierten Daten in Ansprechen auf Anfragen von der Client-Vorrichtung intermittierend an ein Netzwerk überträgt, wobei die Client-Vorrichtung ferner umfasst:

ein Extraktionsmittel (2113) zum Extrahieren der Server-Zeitintervalldaten von dem ersten Abschnitt der durch den Empfänger empfangenen codierten Daten;
einen Taktschaltkreis, der ein Referenztaktsignal erzeugt; und
eine Datenanfrageeinheit (2121), die eine Anfrage für eine Übertragung eines nächsten Burst-Abschnitts der codierten Daten an die Client-Vorrichtung zu jedem angefragten Zeitintervall des Clients an die Server-Vorrichtung überträgt, das gemäß den extrahierten Server-Zeitintervalldaten und einer Client-Zeit ermittelt wird, die durch das Referenztaktsignal angegeben ist, um die Anfragen periodisch zu der Server-Vorrichtung zu übertragen, und
wobei die Decodiereinrichtung die Abschnitte der durch den Empfänger empfangenen codierten Daten kontinuierlich decodiert, um die Bewegtbild-Abbildungsdaten und/oder die Audiodaten ohne Unterbrechung in einer Client-Zeitbasis wiederzugeben.

6. Wiedergabevorrichtung, die zur Verbindung mit einem Netzwerk geeignet ist, umfassend:

einen Empfänger (11), der Burst-Abschnitte von durch Codieren von Bewegtbild-Abbildungsdaten und/oder Audiodaten erhaltenen codierten Daten von einem Server über das Netzwerk empfängt; und
eine Decodiereinrichtung (18), die die Burst-Abschnitte der durch den Empfänger empfangenen codierten Daten decodiert, um die Bewegtbild-Abbildungsdaten oder die Audiodaten wiederzugeben, **dadurch gekennzeichnet, dass** Zeitdaten des Servers an jeden der Burst-Abschnitte der codierten Daten angebracht sind, wobei die an jeden Burst-Abschnitt der codierten Daten angebrachten Zeitdaten des Servers eine Übertragungszeit des anderen Abschnitts der codierten Daten angeben, der anschließend an den jeweiligen Abschnitt der codierten Daten übertragen werden soll, wobei die Vorrichtung ferner umfasst:

eine Extrahiereinrichtung (13), die die Zeitdaten des Servers von jedem der Burst-Abschnitte der durch den Empfänger empfangenen codierten Daten extrahiert;

einen Taktgenerator (15), der ein Referenztaktsignal erzeugt; und

eine Datenanfrageeinheit (21), die jedes Mal, wenn die Extrahiereinrichtung momentane Zeitdaten des Servers von einem momentanen Burst-Abschnitt der codierten Daten extrahiert, eine Anfrage für einen nächsten Burst-Abschnitt der codierten Daten anschließend an den momentanen Abschnitt der codierten Daten zu einer Client-Anfragezeit an den Server überträgt, die gemäß den extrahierten momentanen Zeitdaten des Servers und einer gegenwärtigen Zeit ermittelt wird, die durch das Referenztaktsignal angegeben ist, wobei die Decodiereinrichtung die Burst-Abschnitte der von dem Server übertragenen codierten Daten kontinuierlich decodiert, wodurch die Bewegtbild-Abbildungsdaten oder die Audiodaten in einer Zeitbasis der Wiedergabevorrichtung ohne Unterbrechung der Wiedergabe wiedergegeben werden.

7. Wiedergabevorrichtung zur Verbindung mit einem Netzwerk, um Burst-Abschnitte von durch Codieren von Bewegtbild-Abbildungsdaten und/oder Audiodaten erhaltenen codierten Daten zu empfangen, umfassend:

einen Empfänger (11), der die Burst-Abschnitte der codierten Daten von einem Server über das Netzwerk empfängt; und

eine Decodiereinrichtung (18), die die Burst-Abschnitte der durch den Empfänger empfangenen codierten Daten decodiert, um die Bewegtbild-Abbildungsdaten oder die Audiodaten wiederzugeben, **dadurch gekennzeichnet, dass**

der Beginn der Burst-Abschnitte der codierten Daten Intervalldaten umfasst, die Zeitintervalle einer Übertragung der Burst-Abschnitte von dem Server angeben, um die Bewegtbild-Abbildungsdaten oder die Audiodaten kontinuierlich wiederzugeben, wobei die Vorrichtung ferner umfasst:

eine Extrahiereinrichtung (2113), die die Intervalldaten von der Spitze der durch den Empfänger empfangenen Burst-Abschnitte extrahiert;

einen Taktgenerator (15), der ein Referenztaktsignal erzeugt; und

eine Datenanfrageeinheit (2121), die jedes Mal, wenn der Empfänger einen momentanen Burst-Abschnitt empfängt, eine Anfrage für einen nächsten Burst-Abschnitt anschließend an den momentanen Burst-Abschnitt zu einer Anfragezeit an den Server überträgt, die gemäß den durch die Extrahiereinrichtung extrahierten Intervalldaten und einer gegenwärtigen Zeit ermittelt wird, die durch das Referenztaktsignal angegeben ist, um die Burst-Abschnitte in dem Empfänger zu den Zeitintervallen periodisch zu empfangen, die durch die Intervalldaten angegeben sind, und

wobei die Decodiereinrichtung (18) die von dem Server übertragenen Burst-Abschnitte in Ansprechen auf die Anfragen kontinuierlich decodiert, um die Bewegtbild-Abbildungsdaten und/oder die Audiodaten in einer Zeitbasis der Wiedergabevorrichtung kontinuierlich wiederzugeben.

## Revendications

1. Système de transmission de données comprenant :

au moins un dispositif serveur et au moins un dispositif client, le dispositif serveur comprenant:

une mémoire (1701) qui est adaptée pour stocker des données codées obtenues en codant au moins l'une de données d'images de représentations animées et de données audio ; et

un émetteur de données (1702) qui est adapté pour transmettre par intermittence des portions en rafale desdites données codées lues à partir de ladite mémoire, lesdites portions en rafale étant transmises dans des rafales respectives à un système de réseau ; et

le dispositif client comprenant :

un récepteur (11) qui reçoit les portions en rafale des données codées transmises à partir du dispositif serveur dans les rafales destinées au dispositif client ; et

un décodeur (18) qui est adapté pour décoder les portions en rafale des données codées pour reproduire les données d'images de représentations animées ou les données audio dans une base de temps, **caractérisé en ce que** ledit dispositif serveur comprend en plus :

un générateur de données temporelles de serveur (1704) qui est adapté pour générer des données temporelles de serveur pour chacune des portions en rafale des données codées lues à partir de ladite mémoire, les données temporelles de serveur étant générées pour chaque portion en rafale des données codées et indiquant un temps de transmission d'une portion en rafale suivante des données codées qui doivent être transmises au dispositif client après transmission d'une portion en rafale présente des données codées pour laquelle les données temporelles de serveur ont été générées, les temps de transmission indiqués par les morceaux de données temporelles de serveur étant générés pour fournir une reproduction continue les données d'images de représentations animées ou les données audio par le décodeur du dispositif client ; et

une unité de fixation (1702) qui est adaptée pour fixer lesdites données temporelles de serveur générées pour chaque portion en rafale des données codées à la portion en rafale respective desdites données codées pour laquelle elles ont été générées, et ledit dispositif client comprenant en plus :

un extracteur (13) qui est adapté pour extraire lesdites données temporelles de serveur de chaque portion en rafale des données codées reçues dans ledit récepteur, un générateur de données temporelles de client (15) qui est adapté pour générer des données temporelles de client indicatives d'un temps présent dudit dispositif client, et une unité de demande de données (21) qui est adaptée pour transmettre, à chaque fois que l'extracteur extrait des données temporelles de serveur actuelles d'une portion en rafale actuelle des données codées, une demande pour une portion en rafale suivante des données codées subséquentes à la portion en rafale actuelle des données codées audit dispositif serveur à un minutage de demande déterminé en conformité avec lesdites données temporelles de serveur actuelles et un temps présent indiqué par lesdites données temporelles de client, le dispositif serveur sortant la portion en rafale suivante des données codées au dispositif client en réponse à la demande.

2. Système de transmission de données comme revendiqué dans la revendication 1, dans lequel ledit décodeur décode en réponse auxdites données temporelles de client, et ladite unité de demande de données comprend :

un soustracteur (14) pour obtenir une différence entre lesdites données temporelles de serveur et lesdites données temporelles de client lorsque lesdites données temporelles de serveur sont reçues, un moyen de détermination de minutage de demande (17) pour compenser une relation entre lesdites données temporelles de client et les données temporelles de serveur reçues en conformité avec ladite différence et déterminer ledit minutage de demande en conformité avec lesdites données temporelles de client et la relation compensée, et un moyen de transmission de demande (20) sensible audit moyen de détermination de minutage de demande pour générer et transmettre ladite demande audit dispositif serveur.

3. Système de transmission de données comme revendiqué dans la revendication 1, dans lequel la mémoire du dispositif serveur stocke des données d'images de représentations animées codées et des données audio codées, l'émetteur de données du dispositif serveur transmet par intermittence une rafale vidéo incluant une portion en rafale desdites données d'images de représentations animées codées et une rafale audio incluant une portion en rafale des données audio codées lues à partir de ladite mémoire au système de réseau respectivement, le récepteur du dispositif client reçoit lesdites rafales vidéo et audio destinées audit dispositif client, le décodeur du dispositif client décode chacune des portions en rafale desdites données d'images de représentations animées codées dans lesdites rafales vidéo et chacune des portions en rafale desdites données audio codées dans lesdites rafales audio, le générateur de données temporelles de serveur dudit dispositif serveur inclut:

un générateur de données temporelles de vidéo (1804) qui est adapté pour générer des données temporelles de vidéo pour chacune des rafales vidéo, les données temporelles de vidéo générées pour chaque rafale vidéo indiquant un temps de transmission de l'autre rafale vidéo qui doit être transmise au dispositif client après transmission de la chaque rafale vidéo, les temps de transmission indiqués par les morceaux de données temporelles de vidéo étant générés pour fournir une reproduction continue des données d'images de représentations animées par le décodeur du dispositif client ; et un générateur de données temporelles d'audio (1805) qui est adapté pour générer des données temporelles d'audio pour chacune des rafales audio, les données temporelles d'audio générées pour chaque rafale audio indiquant un temps de transmission de l'autre rafale audio qui doit être transmise au dispositif client après transmission de la chaque rafale audio, les temps de transmission indiqués par les morceaux de données temporelles d'audio étant générés pour fournir une reproduction continue des données audio par le décodeur du dispositif client ;

l'unité de fixation fixe lesdites données temporelles de vidéo générées pour chaque rafale vidéo à la chaque rafale vidéo, et fixe lesdites données temporelles d'audio générées pour chaque rafale audio à la chaque rafale audio,

l'extracteur du dispositif client extrait, à chaque fois que le récepteur reçoit une rafale vidéo actuelle, des données temporelles de vidéo depuis ladite rafale vidéo actuelle et extrait, à chaque fois que le récepteur reçoit une rafale audio, des données temporelles d'audio depuis ladite rafale audio actuelle, et

l'unité de demande de données du dispositif client incluant :

une première unité de demande de données (1821) qui est adaptée pour transmettre, à chaque fois que l'extracteur extrait des données temporelles de vidéo actuelles d'une rafale vidéo actuelle, une première demande pour une rafale vidéo suivante subséquente à la rafale vidéo actuelle à un minutage de demande déterminé en conformité avec les données temporelles de vidéo actuelles et un temps présent indiqué par lesdites données temporelles de client ; et

une deuxième unité de demande de données (1921) qui est adaptée pour transmettre, à chaque fois que l'extracteur extrait des données temporelles d'audio actuelles d'une rafale audio actuelle, une deuxième demande pour une rafale audio suivante subséquente à la rafale audio actuelle à un minutage de demande déterminé en conformité avec les données temporelles d'audio actuelles et un temps présent indiqué par lesdites données temporelles de client.

4. Système de transmission de données comme revendiqué dans la revendication 3, dans lequel ladite première unité de demande de données comprend :

un premier soustracteur (1814) pour obtenir une première différence entre lesdites données temporelles de vidéo et lesdites données temporelles de client lorsque lesdites données temporelles de vidéo sont reçues,

un premier compensateur (1817) pour compenser une première relation entre lesdites données temporelles de client et les données temporelles de vidéo reçues en conformité avec ladite première différence, et

une première unité de détermination de minutage de demande (1817) pour déterminer ledit premier minutage de demande en conformité avec lesdites données temporelles de client et la première relation compensée, ladite deuxième unité de demande de données comprend :

un deuxième soustracteur (1914) pour obtenir une deuxième différence entre lesdites données temporelles d'audio et lesdites données temporelles de client lorsque lesdites données temporelles d'audio sont reçues,

un deuxième compensateur (1917) pour compenser une deuxième relation entre lesdites données temporelles de client et les données temporelles d'audio reçues en conformité avec ladite deuxième différence, et

une deuxième unité de détermination de minutage de demande (1917) pour déterminer ledit deuxième minutage de demande en conformité avec lesdites données temporelles de client et la deuxième relation compensée.

5. Système de transmission de données comprenant :

au moins un dispositif serveur et au moins un dispositif client, le dispositif serveur comprenant :

une mémoire (2001) qui est adaptée pour stocker des données codées obtenues en codant au moins l'une de données d'images de représentations animées et de données audio ; et

un émetteur de données (1702) qui est adapté pour transmettre par intermittence des portions en rafale desdites données codées lues à partir de ladite mémoire, lesdites portions en rafale étant transmises dans des rafales respectives à un système de réseau ; et le dispositif client comprenant :

un récepteur (11) qui reçoit les portions en rafale des données codées transmises à partir du dispositif serveur dans les rafales destinées audit dispositif client ; et

un décodeur (18) qui est adapté pour décoder les portions en rafale des données codées pour reproduire les données d'images de représentations animées ou les données audio dans une base de temps, **caractérisé en ce que** ledit dispositif serveur comprend en plus :

un générateur de données d'intervalles temporels (2004) qui génère des données d'intervalles temporels de serveur qui indiquent des intervalles temporels de transmission des portions en rafale des données codées pour permettre au dispositif client de reproduire de manière continue au moins l'une des données d'images de représentations animées et des données audio ;

une unité de fixation de données (2002) qui fixe lesdites données d'intervalles temporels à la première portion en rafale des données codées; et

un émetteur de données (2002) qui transmet par intermittence la première portion des données codées avec lesdites données d'intervalles temporels et les autres portions des données codées lues à partir de la mémoire à un réseau en réponse à des demandes depuis le dispositif client, ledit dispositif client comprend en plus :

un moyen d'extraction (2113) pour extraire lesdites données d'intervalles temporels de serveur depuis la première portion des données codées reçues par le récepteur ;

un circuit d'horloge qui génère un signal d'horloge de référence ; et

une unité de demande de données (2121) qui transmet une demande audit dispositif serveur pour transmission d'une portion en rafale suivante des données codées audit dispositif client à chaque intervalle temporel de client demandé déterminé en conformité avec lesdites données d'intervalles temporels de serveur extraites et un temps de client indiqué par ledit signal d'horloge de référence pour transmettre de manière périodique les demandes audit dispositif serveur, et

le décodeur décode de manière continue les portions des données codées reçues par le récepteur pour reproduire au moins l'une des données d'images de représentations animées et les données audio sans interruption dans une base de temps de client.

6. Dispositif de reproduction, qui est adapté pour être connecté à un réseau, comprenant :

un récepteur (11) qui reçoit des portions en rafale de données codées, obtenues en codant au moins l'une de données d'images de représentations animées et de données audio, depuis un serveur à travers le réseau ; et

un décodeur (18) qui décode les portions en rafale des données codées reçues par le récepteur pour reproduire les données d'images de représentations animées ou les données audio, **caractérisé en ce que**

les données temporelles de serveur sont fixées à chacune des portions en rafale des données codées, les données temporelles de serveur fixées à chaque portion en rafale des données codées étant indicatives d'un temps de transmission de l'autre portion des données codées qui doivent être transmises de manière subséquente à la chaque portion des données codées, le dispositif comprend en plus :

un extracteur (13) qui extrait les données temporelles de serveur de chacune des portions en rafale des données codées reçues par le récepteur ;

un générateur d'horloge (15) qui génère un signal d'horloge de référence ; et

une unité de demande de données (21) qui transmet, à chaque fois que l'extracteur extrait des données temporelles de serveur actuelles depuis une portion en rafale actuelle des données codées, une demande pour une portion en rafale suivante des données codées subséquente à la portion actuelle des données codées au serveur à un temps de client de demande déterminé en conformité avec les données temporelles de serveur actuelles extraites et un temps présent indiqué par le signal d'horloge de référence, et le décodeur décode de manière continue les portions en rafale des données codées transmises à partir du serveur pour reproduire ainsi les données d'images de représentations animées ou les données audio dans une base de temps du dispositif de reproduction sans interruption de la reproduction.

7. Dispositif de reproduction à connecter à un réseau pour recevoir des portions en rafale de données codées obtenues en codant au moins l'une de données d'images de représentations animées et de données audio, comprenant :

un récepteur (11) qui reçoit les portions en rafale des données codées depuis un serveur à travers le réseau ; et

un décodeur (18) qui décode les portions en rafale des données codées reçues par le récepteur pour reproduire les données d'images de représentations animées ou les données audio, **caractérisé en ce que** le démarrage des portions en rafale des données codées inclut des données d'intervalles indicatives d'intervalles temporels de transmission des portions en rafale depuis le serveur pour reproduire de manière continue les données d'images de représentations animées ou les données audio, le dispositif comprend en plus :

un extracteur (2113) qui extrait les données d'intervalles depuis le haut des portions en rafale reçues par le récepteur ;

un générateur d'horloge (15) qui génère un signal d'horloge de référence ; et

une unité de demande de données (2121) qui transmet, à chaque fois que le récepteur reçoit une portion en rafale actuelle, une demande pour une portion en rafale suivante subséquente à la portion en rafale actuelle au serveur à un temps de demande déterminé en conformité avec les données d'intervalles extraites par l'extracteur et un temps présent indiqué par le signal d'horloge de référence pour recevoir de manière périodique les portions en rafale dans le récepteur aux intervalles temporels indiqués par les données d'intervalles, et

le décodeur (18) décode de manière continue les portions en rafale transmises à partir du serveur en réponse aux demandes pour reproduire de manière continue au moins l'une des données d'images de représentations animées et les données audio dans une base de temps du dispositif de reproduction.

# FIG. 1

NETWORK SYSTEM

NETWORK I/F CKT ⌇11

BUFFER MEMORY ⌇12

DECODER ⌇18

REPRO CKT ⌇19

Ca

REF CLK SIG

TIME DATA EXTRACTION CKT ⌇13

15a — CLIENT'S TIME DATA

CLIENT'S TIME DATA GEN CKT ⌇15

REF CLK SIG

SERVER'S TIME DATA

15a —

DATA REQUEST CKT ⌇21

SUBTRACTOR

14

MEMORY

16

REQUEST TIMING DETERMINING CKT

17

REQUEST XMSN CKT ⌇20

EP 0 895 420 B1

FIG. 2A  C1→S1 DATA REQUEST

FIG. 2B  S1→C1 DATA XMSN

FIG. 2C  C2→S1 DATA REQUEST

FIG. 2D  S1→C2 DATA XMSN

FIG. 3A

FIG. 3B

EP 0 895 420 B1

EP 0 895 420 B1

FIG. 4A

Cb→Sb
DATA
REQUEST

FIG. 4B

Sb→Cb
DATA
XMSN
(BURST)
(XMSN)

VIDEO
TIME
DATA
tv1

AUDIO TIME DATA
ta1

f1  g1  f2  g2

V0          A0          V1          A1          V2          A2          V3          A3
VIDEO    AUDIO
BURST    BURST

tv2    ta2        tv3    ta3        tv4    ta4

Tv1  Ta1  Ta1'    Tv2        Ta2        Tv3        Ta3

TIME

FIG. 5A

FIG. 5B

VIDEO
INTERVAL
DATA
j1

AUDIO INTERVAL
DATA
k1

Cc→Sc DATA REQUEST

Sc→Cc DATA XMSN

TIME

(ms)

EP 0 895 420 B1

# FIG. 6

NETWORK SYSTEM — NET-WORK I/F CKT (41)

NETWORK BUFFER MEMORY (42)

Cd

DECODING BUFFER MEMORY (44)

DECODER (45)

REPRO CKT (19)

47 RECEIVING CKT

BUFFER MEMORY OBSERVING CKT (43)

DATA REQUEST

TIME DATA & CLK GEN CKT (46)

TIME DATA & REF CLK SIG

# FIG. 7

DATA → FIFO (51) → OUTPUT DATA

52 QUARTER-OCCUPIED SIG

53 HALF-OCCUPIED SIG

54 THREE-QUARTER-OCCUPIED SIG

FIG. 8A  Cd1→Sd1
DATA REQUEST

FIG. 8B  Sd1→Cd1
DATA XMSN

FIG. 8C  Cd2→Sd1
DATA REQUEST

FIG. 8D  Sd1→Cd2
DATA XMSN

EP 0 895 420 B1

FIG. 9A

Ce→Se
DATA
REQUEST

FIG. 9B

Se→Ce
DATA
XMSN

REQ AMTB

REQ AMTA  REQ AMTC  REQ AMTD  REQ AMTE

he1  r1  he2  r2  he3  r3  he4  r4  he5  r5

d11  d12  d13  d14  d15

XMSN
AMT Ax

XMSN
AMT Bx

XMSN
AMT Cx

XMSN
AMT Dx

XMSN
AMT Ex

EP 0 895 420 B1

**FIG. 10A**

Cf→Sf
DATA
REQUEST

**FIG. 10B**

Sf→Cf
DATA
XMSN

REQ NO.2

REQ NO.1  REQ NO.3  REQ NO.4  REQ NO.5

he1 rn1  he2 rn2  he3 rn3  he4 rn4  he5 rn5

n1 d11  n2 d12 d13  n4 d14  n5 d15

XMSN NO.1  XMSN NO.2  n3 XMSN NO.3  XMSN NO.4  XMSN NO.5

EP 0 895 420 B1

*FIG. 11A*

Cg→Sg
DATA
REQUEST

he1   TEST   he2   AMT
DATA

*FIG. 11B*

Sg→Cg
DATA
XMSN

re

RESPONSE
SIG

TURN AROUND
INTERVAL

FIG. 12A  Cg→Sg

he1  TEST  he2  TEST  he3  AMT DATA

FIG. 12B  Sg→Cg

re  re

TURN AROUND INTERVAL 1  TURN AROUND INTERVAL 2

EP 0 895 420 B1

34

*FIG. 13A*

*FIG. 13B*

Ch→Sh
DATA
REQUEST

Sh→Ch
DATA
XMSN

re    BU    re    BU    he2 AMT
                              DATA

TEST    TEST

he         he

TURN AROUND    TURN AROUND
INTERVAL 1     INTERVAL 2

EP 0 895 420 B1

# FIG. 14

EP 0 895 420 B1

FIG. 15A

Ci→Si1
VIDEO DATA
REQUEST

FIG. 15B

Si1→Ci
VIDEO DATA
XMSN

FIG. 15C

Ci→Si2
AUDIO DATA
REQUEST

FIG. 15D

Si2→Ci
AUDIO DATA
XMSN

EP 0 895 420 B1

# FIG. 16A

S1 (Sa,···Si,Sa1···Si1)

SERVER APP

NE

NETWORK

SERVER APP

S2 (Sa2, Sb2, Sc2, Si2)

C1 (Ca,···Ci,Ca1···Ci1)

CLIENT APP

CLIENT APP

C2 (Ca2, Cd2)

# FIG. 16B

S1 (Sa,···Si,Sa1···Si1)

SERVER APP

LAN

LOUTER

LOUTER

LAN

SERVER APP

S2 (Sa2, Sb2, Sc2, Si2)

CLIENT APP

LAN

LOUTER

MODEM

C2 (Ca2, Cd2)

NE'

C1 (Ca,···Ci,Ca1···Ci1)

CLIENT APP

LAN

LOUTER

MODEM

TEL NETWORK

## FIG. 17

Sa

NETWORK
SYSTEM

NETWORK
I/F CKT

1703

XMSN CKT

1702

MEMORY

1701

TIME DATA

SERVER'S
TIME DATA
GEN CKT

1704

REF CLK SIG

EP 0 895 420 B1

## FIG. 18

Sb

NETWORK
SYSTEM

NETWORK
I/F CKT          1703

XMSN CKT         1802

MEMORY           1701

VIDEO TIME
DATA

VIDEO TIME
DATA GEN
CKT              1804

REF CLK SIG

AUDIO TIME
DATA

AUDIO TIME
DATA GEN
CKT              1805

REF CLK SIG

EP 0 895 420 B1

FIG. 19

# FIG. 20

Sc

2003 — NETWORK I/F CKT

2002 — XMSN CKT

2001 — MEMORY

2005 PROGRAM REQUEST

2006 VIDEO INTERVAL DATA, 2007 AUDIO INTERVAL DATA

2004 — INTERVAL DATA GEN CKT

EP 0 895 420 B1

FIG. 21

## FIG. 22

# FIG. 23

Se

1703

NETWORK
I/F CKT

2301

XMSN CKT

1701

MEMORY

XMSN AMT
DETERMINING
CKT

2302

# FIG. 24

Ce

41

NETWORK
SYSTEM

NET-
WORK
I/F
CKT

42

NETWORK
BUFFER
MEMORY

47
RECEIVING
CKT

44

DECODING
BUFFER
MEMORY

45

DECODER

19

REPRO
CKT

DATA REQUEST
( REQUEST )
( AMT DATA )

BUFFER
MEMORY
OBSERVING
CKT

143

TIME DATA
CLK GEN
CKT

46

TIME DATA &
REF CLK SIG

# FIG. 25

Sf

```
      1703                        2501                    1701
  ┌──────────┐              ┌──────────┐            ┌──────────┐
←─│ NETWORK  │←─────────────│ XMSN CKT │←───────────│  MEMORY  │
  │ I/F CKT  │              └──────────┘            └──────────┘
  └──────────┘                   ↑                        ↑
         │                       │                        │
         │                  ┌──────────┐                  │
         └─────────────────→│ XMSN NO. │──────────────────┘
                            │ DATA GEN │
                            │ CKT      │
                            └──────────┘
                                 2502
```

# FIG. 26

Cf

```
              41         42                  44          45          19
          ┌───────┐ ┌──────────┐        ┌─────────┐ ┌─────────┐ ┌───────┐
NETWORK   │ NET-  │ │ NETWORK  │        │DECODING │ │         │ │ REPRO │
SYSTEM ←─→│ WORK  │→│ BUFFER   │───────→│ BUFFER  │→│ DECODER │→│ CKT   │
          │ I/F   │ │ MEMORY   │        │ MEMORY  │ │         │ │       │
          │ CKT   │ └──────────┘        └─────────┘ └─────────┘ └───────┘
          └───────┘      │         47                    ↑
              ↑          │      RECEIVING                 │
              │          │      CKT                       │
              │          ↓                          TIME DATA
              │     ┌──────────┐                    CLK SIG
              │     │ BUFFER   │      ┌─────────┐       │
              │     │ MEMORY   │      │TIME DATA│       │
              └─────│ OBSERVING│      │CLK GEN  │───────┘
DATA REQUEST        │ CKT      │      │CKT      │
( REQUEST )         └──────────┘      └─────────┘
( NO. DATA )             243               46
```

# FIG. 27

Sg

| 1703 | | 2501 | | 1701 |
|------|--|------|--|------|
| NETWORK I/F CKT | | XMSN CKT | | MEMORY |

TEST SIG, DATA REQUEST, AMT DATA

RESPONSE SIG

XMSN CONT CKT

2802

# FIG. 28

BUFFER MEMORY CONT CKT — 2801

Cg

NETWORK SYSTEM

41 NET-WORK I/F CKT

42 NETWORK BUFFER MEMORY

44 DECODING BUFFER MEMORY

45 DECODER

19 REPRO CKT

47 RECEIVING CKT

RES

BUFFER MEMORY OBSERVING CKT

343

TIME DATA CLK GEN CKT

46

TIME DATA CLK SIG

TEST SIG, DATA REQUEST (REQUEST / AMT DATA)

## FIG. 29

Sh

## FIG. 30

Ch

FIG. 31

EP 0 895 420 B1